# EUROPEAN PATENT APPLICATION

(11) **EP 4 385 725 A1**
(43) Date of publication of application: **19.06.2024**
(21) Application number: 22213903.2
(22) Date of filing: 15.12.2022
(51) Int. Cl.: B32B 7/022, B32B 1/02, B32B 3/30, B32B 5/02, B32B 7/03, B32B 27/12, B32B 29/00, B65D 65/40

(54) **SHEET-LIKE COMPOSITE FOR DIMENSIONALLY STABLE FOOD OR DRINK PRODUCT CONTAINERS WITH A BARRIER LAYER WITH FIBRES AND A RATIO OF TENSILE STRENGTHS**

(71) Applicant: SIG Services AG, 8212 Neuhausen am Rheinfall (CH)
(72) Inventor: GÖTZ, Georg, 52070 Aacheb (DE); SELKE, Aline, 52477 Alsdorf (DE); SCHOLLENBERGER, Heinrich, 52428 Jülich (DE); SCHLOEMER, Marielle, 52511 Geilenkirchen (DE); PIEPMEYER,Manuel, 52525 Heinsberg (DE)
(74) Representative: Herzog IP Patentanwalts GmbH

(57) **Abstract**

The invention pertains to a sheet-like composite, comprising:
a. a carrier layer,
b. a barrier layer comprising a plurality of fibres, and
c. a first inner polymer layer;
wherein a partial sheet-like composite is characterised by a ratio of a first composite tensile strength in a first composite direction to and a further composite tensile strength in a further composite direction in a range from more than 0.5 to 1.9. The invention further pertains to a sheet-like composite with a barrier layer, which is characterised by a ratio of a first tensile strength to a further tensile strength, to methods for producing a sheet-like composite, to the sheet-like composites obtainable by these methods, to rolls and blanks, to container precursors, closed containers, a method which includes obtaining a longitudinal seam, a method for producing a closed container, and uses of a sheet-like composite, a container precursor, a roll or a barrier film.

## Description

The present invention refers to a sheet-like composite, comprising a layer sequence which comprises the following layers, superimposed to one another, in the following order from an outer surface of the sheet-like composite to an inner surface of the sheet-like composite:
a. a carrier layer,
b. a barrier layer which comprises a plurality of fibres, and
c. a first inner polymer layer;

wherein a partial sheet-like composite consists of only the layers of the sheet-like composite, which are arranged on a side of the carrier layer facing the inner surface; wherein the partial sheet-like composite
   - has a first composite direction in a composite plane of the partial sheet-like composite,
   - a further composite direction, which is also in the composite plane of the partial sheet-like composite, but perpendicular to the first composite direction,
   - a first composite tensile strength in the first composite direction, and
   - a further composite tensile strength in the further composite direction;
wherein a ratio of the first composite tensile strength to the further composite tensile strength is in a range from more than 0.5 to 1.9. The invention further pertains to a sheet-like composite with a barrier layer, which is characterised by a ratio of a first tensile strength to a further tensile strength. Further, the invention refers to methods for producing a sheet-like composite, to the sheet-like composites obtainable by these methods, to rolls and blanks of sheet-like composite, to container precursors, closed containers, a method which includes obtaining a longitudinal seam, a method for producing a closed container, and uses of a sheet-like composite, a container precursor, a roll or a barrier film.

For some time, foodstuffs have been preserved, whether they be foodstuffs for human consumption or else animal feed products, by storing them either in a can or in a jar closed by a lid. In this case, shelf life can be increased firstly by separately and very substantially sterilising the foodstuff and the container in each case, here the jar or can, and then introducing the foodstuff into the container and closing the container. However, these measures of increasing the shelf life of foodstuffs, which have been tried and tested over a long period, have a series of disadvantages, for example the need for another sterilisation later on. Cans and jars, because of their essentially cylindrical shape, have the disadvantage that very dense and space-saving storage is not possible. Moreover, cans and jars have considerable intrinsic weight, which leads to increased energy expenditure in transport. Moreover, production of glass, tinplate or aluminium, even when the raw materials used for the purpose are recycled, necessitates quite a high expenditure of energy. In the case of jars, an aggravating factor is elevated expenditure on transport. The jars are usually prefabricated in a glass factory and then have to be transported to the facility where the foodstuff is dispensed with utilisation of considerable transport volumes. Furthermore, jars and cans can be opened only with considerable expenditure of force or with the aid of tools and hence in a rather laborious manner. In the case of cans, there is a high risk of injury emanating from sharp edges that arise on opening. In the case of jars, it is a repeated occurrence that broken glass gets into the foodstuff in the course of filling or opening of the filled jars, which can lead in the worst case to internal injuries on consumption of the foodstuff. In addition, both cans and jars have to be labelled for identification and promotion of the foodstuff contents. The jars and cans cannot be printed directly with information and promotional messages. In addition to the actual printing, a substrate is thus needed for the purpose, a paper or suitable film, as is a securing means, an adhesive or sealant.

Other packaging systems are known from the prior art, in order to store food and drink products over a long period with minimum impairment. These are containers produced from sheet-like composites - frequently also referred to as laminates. Sheet-like composites of this kind are frequently constructed from an outer polyolefin layer, a carrier layer usually consisting of cardboard or paper which imparts dimensional stability to the container, an adhesion promoter layer, a barrier layer and an inner polyolefin layer, as disclosed inter alia in WO 90/09926 A2. As the carrier layer imparts rigidity and dimensional stability to the container produced from the laminate, these laminate containers are to be seen in a line of development with the above-mentioned glasses and jars. In this, the above-mentioned laminate containers differ severely from pouches and bags produced from thinner foils without carrier layer. The dimensionally stable laminate containers already have many advantages over the conventional jars and cans. Nevertheless, there are opportunities for improvement in the case of these packaging systems too.

For instance, aluminium foil has been used for the barrier layer for decades. This is motivated by the superior barrier performance of several µm thick aluminium foil, in particular with regard to oxygen. Aluminium, however, is a material which is comparatively energy- and resource-intensive to produce. Moreover, the aluminium foil also renders recycling of the laminate after the use of the prior art container comparatively energy-intensive. Lately, these drawbacks have become more and more relevant. Therefore, different polymers were tested for the barrier layer. None of these, however, turned out suitable to replace the aluminium foil in mainstream standard products. This is, for example, due to the barrier performance of these layers of polymer being worse than that of aluminium foil, in particular as the barrier performance of the polymer layers further suffers from the laminate being mechanically processed and from humidity. Recently, prefabricated barrier films with a polymer substrate, which has been coated with a thin layer of a material, that provides barrier action, for example aluminium or aluminum oxide, have attracted interest. Such barrier films often provide good barrier properties and the materials used are more eco-friendly than aluminium foil. Often a foil of PET is used as the substrate which is coated, for example by physical or chemical vapour deposition. As mentioned above, the outer and inner layers of the packaging laminates for dimensionally stable food or drink product containers are frequently made from polyolefins. This leads to a problem if a PET-foil is used as part of the barrier layer. It turned out that the combination of polyolefins and PET is disadvantageous in terms of recycling. The recycling products with a combination of PET and polyolefins cannot be used for extrusion coating without further preparation due to insufficient processing properties. Therefore, these recycling products have to be separated into a PET fraction and a polyolefin fraction. This is a rather energy-intensive thermal process which is, thus, unfavourable in terms of eco-friendliness. Even if a polyolefin substrate could be used for the barrier coating, neither the polymer substrate nor the coating material is obtained from a renewable source of material. In that regard, even a laminate with such a barrier layer is not very sustainable. In addition, production of the coated films by physical or chemical vapour deposition is technically rather complex.

So-called barrier papers have been known in the art for a long time, but have been driven out of commercial products by the barrier layers discussed above due to their superior barrier performances. Recently, another paper-like material - microfibrillated cellulose (MFC) - has become available. Such paper-like materials can not only be made from renewable sources, but are even bio-degradable and thus superior to all the above types of barrier layers in terms of eco-friendlessness. Therefore, paper-like barrier layers may greatly improve sustainability of packaging laminates. At present, it is still a challenge to produce high shelf-life containers from laminates with paper-like barrier layers by the standard methods of the technical field, i.e. by the so-called sleeve method, which uses prefabricated blanks for individual containers, and by the so-called tube method, which is also known as roll-fed method and FFS-method (form fill seal-method).

In general, it is an object of the present invention to at least partly overcome a disadvantage arising from the prior art.

It is a further object of the invention to provide a packaging laminate which is more flexible in terms of suitability for production of eco-friendly dimensionally stable food or drink product containers with high shelf-life by standard methods for producing dimensionally stable food or drink product containers.

A further object of the invention is to a packaging laminate which is more flexible in terms of suitability for production of eco-friendly dimensionally stable food or drink product containers with high shelf-life by the sleeve method and the tube method.

Further, it is an object of the invention to provide a packaging laminate for production of dimensionally stable food or drink product containers with an as high as possible shelf-life, where a barrier layer of the packaging laminate is as far as possible made from renewable materials.

It is a further object of the invention to provide a dimensionally stable food or drink product container made from packaging laminate, where the container is mechanically more stable.

A further object of the invention is to provide a dimensionally stable food or drink product containers made from packaging laminate, where the container shows good compression stability in longitudinal and transversal directions.

A contribution to at least partly fulfilling at least one, preferably more than one, of the above-mentioned objects is made by any of the embodiments of the invention.

A 1^{st} embodiment of the invention is a sheet-like composite, comprising a layer sequence which comprises the following layers, superimposed to one another, in the following order from an outer surface of the sheet-like composite to an inner surface of the sheet-like composite:
a. a carrier layer,
b. a barrier layer which comprises a plurality of fibres, and
c. a first inner polymer layer;

wherein a partial sheet-like composite consists of only the layers of the sheet-like composite, which are arranged on a side of the carrier layer facing the inner surface; wherein the partial sheet-like composite
   - has a first composite direction in a composite plane of the partial sheet-like composite,
   - a further composite direction, which is also in the composite plane of the partial sheet-like composite, but perpendicular to the first composite direction,
   - a first composite tensile strength in the first composite direction, and
   - a further composite tensile strength in the further composite direction;
wherein a ratio of the first composite tensile strength to the further composite tensile strength is in a range from more than 0.5 to 1.9, preferably from more than 0.5 to 1.8, more preferably from more than 0.5 to 1.7, more preferably from 0.6 to 1.6, more preferably from 0.7 to 1.5, more preferably from 0.8 to 1.4, more preferably from 0.9 to 1.3, more preferably from more than 0.9 to 1.2, more preferably from 1.0 to 1.2, even more preferably from 1 to 1.1. Alternatively preferred, the ratio of the first composite tensile strength to the further composite tensile strength is in a range in a range from 0.6 to 1.9, preferably from 0.7 to 1.8, more preferably from 0.8 to 1.7, more preferably from 0.9 to 1.6, more preferably from 1.0 to 1.5, more preferably from 1.1 to 1.4, more preferably from more than 1.2 to 1.4, even more preferably from 1.2 to less than 1.4.

In a preferred embodiment of the sheet-like composite, the barrier layer
- has a first tensile strength in a first barrier layer direction, and
- a further tensile strength in a further barrier layer direction, which is perpendicular to the first barrier layer direction;
wherein a ratio of the first tensile strength to the further tensile strength is in a range from more than 0.5 to less than 1.7, preferably from 0.6 to 1.6, more preferably from 0.7 to 1.5, more preferably from 0.8 to 1.4, more preferably from 0.9 to less than 1.4, more preferably from 0.9 to 1.3, more preferably from more than 0.9 to 1.2, more preferably from 1 to 1.2, even more preferably from 1 to 1.1. Alternatively preferred, the ratio of the first tensile strength to the further tensile strength is in a range from 0.6 to 1.7, more preferably from 0.7 to 1.7, more preferably from 0.8 to 1.6, more preferably from 0.9 to 1.5, more preferably from 1.0 to less than 1.4, even more preferably from 1.1 to 1.3. This preferred embodiment is a 2^{nd} embodiment of the invention, that preferably depends on the 1^{st} embodiment of the invention.

A 3^{rd} embodiment of the invention is a sheet-like composite, comprising a layer sequence which comprises the following layers, superimposed to one another, in the following order from an outer surface of the sheet-like composite to an inner surface of the sheet-like composite:
a. a carrier layer,
b. a barrier layer, and
c. a first inner polymer layer;

wherein the barrier layer
   - comprises a plurality of fibres,
   - has a first tensile strength in a first barrier layer direction, and
   - a further tensile strength in a further barrier layer direction, which is perpendicular to the first barrier layer direction;
wherein a ratio of the first tensile strength to the further tensile strength is in a range from more than 0.5 to less than 1.7, preferably from 0.6 to 1.6, more preferably from 0.7 to 1.5, more preferably from 0.8 to 1.4, more preferably from 0.9 to less than 1.4, more preferably from 0.9 to 1.3, more preferably from more than 0.9 to 1.2, more preferably from 1 to 1.2, even more preferably from 1 to 1.1. Alternatively preferred, the ratio of the first tensile strength to the further tensile strength is in a range from 0.6 to 1.7, more preferably from 0.7 to 1.7, more preferably from 0.8 to 1.6, more preferably from 0.9 to 1.5, more preferably from 1.0 to less than 1.4, even more preferably from 1.1 to 1.3.

In a preferred embodiment of the sheet-like composite, a partial sheet-like composite consists of only the layers of the sheet-like composite, which are arranged on a side of the carrier layer facing the inner surface; wherein the partial sheet-like composite
- has a first composite direction in a composite plane of the partial sheet-like composite,
- a further composite direction, which is also in the composite plane of the partial sheet-like composite, but perpendicular to the first composite direction,
- a first composite tensile strength in the first composite direction, and
- a further composite tensile strength in the further composite direction;
wherein a ratio of the first composite tensile strength to the further composite tensile strength is in a range from more than 0.5 to 1.9, preferably from more than 0.5 to 1.8, more preferably from more than 0.5 to 1.7, more preferably from 0.6 to 1.6, more preferably from 0.7 to 1.5, more preferably from 0.8 to 1.4, more preferably from 0.9 to 1.3, more preferably from more than 0.9 to 1.2, more preferably from 1.0 to 1.2, even more preferably from 1 to 1.1. Alternatively preferred, the ratio of the first composite tensile strength to the further composite tensile strength is in a range in a range from 0.6 to 1.9, preferably from 0.7 to 1.8, more preferably from 0.8 to 1.7, more preferably from 0.9 to 1.6, more preferably from 1.0 to 1.5, more preferably from 1.1 to 1.4, more preferably from more than 1.2 to 1.4, even more preferably from 1.2 to less than 1.4. This preferred embodiment is a 4^{th} embodiment of the invention, that preferably depends on the 3^{rd} embodiment of the invention.

In a preferred embodiment of the sheet-like composite, the first composite tensile strength or the further composite tensile strength or each of both is at least 0.5 kN/m, preferably at least 0.6 kN/m, more preferably at least 0.7 kN/m, more preferably at least 0.8 kN/m, more preferably at least 0.9 kN/m, more preferably 1.0 kN/m, more preferably at least 1.1 kN/m, more preferably at least 1.2 kN/m, more preferably at least 1.3 kN/m, more preferably at least 1.4 kN/m, more preferably at least 1.5 kN/m, more preferably at least 1.6 kN/m, more preferably at least 1.7 kN/m, more preferably at least 1.8 kN/m, more preferably at least 1.9 kN/m, more preferably at least 2.0 kN/m, more preferably at least 2.1 kN/m, more preferably at least 2.2 kN/m, more preferably at least 2.3 kN/m, more preferably at least 2.4 kN/m, more preferably at least 2.5 kN/m, more preferably at least 2.6 kN/m, more preferably at least 2.7 kN/m, more preferably at least 2.8 kN/m, more preferably at least 2.9 kN/m, more preferably at least 3.0 kN/m, more preferably at least 3.1 kN/m, more preferably at least 3.2 kN/m, more preferably at least 3.3 kN/m, more preferably at least 3.4 kN/m, more preferably at least 3.5 kN/m, more preferably at least 3.6 kN/m, more preferably at least 3.7 kN/m, more preferably at least 3.8 kN/m, more preferably at least 3.9 kN/m, more preferably at least 4.0 kN/m, more preferably at least 4.1 kN/m, more preferably at least 4.2 kN/m, more preferably at least 4.3 kN/m, more preferably at least 4.4 kN/m, more preferably at least 4.5 kN/m, more preferably at least 4.6 kN/m, more preferably at least 4.7 kN/m, more preferably at least 4.8 kN/m, more preferably at least 4.9 kN/m, more preferably at least 5.0 kN/m, more preferably at least 5.1 kN/m, more preferably at least 5.2 kN/m, more preferably at least 5.3 kN/m, more preferably at least 5.4 kN/m, more preferably at least 5.5 kN/m, more preferably at least 5.6 kN/m, more preferably at least 5.7 kN/m, more preferably at least 5.8 kN/m, more preferably at least 5.9 kN/m, more preferably at least 6.0 kN/m, more preferably at least 6.1 kN/m, more preferably at least 6.2 kN/m, more preferably at least 6.3 kN/m, more preferably at least 6.4 kN/m, more preferably at least 6.5 kN/m, more preferably at least 6.6 kN/m, more preferably at least 6.7 kN/m, more preferably at least 6.8 kN/m, more preferably at least 6.9 kN/m, more preferably at least 7.0 kN/m, more preferably at least 7.1 kN/m, more preferably at least 7.2 kN/m, more preferably at least 7.3 kN/m, more preferably at least 7.4 kN/m, more preferably at least 7.5 kN/m, more preferably at least 7.6 kN/m, more preferably at least 7.7 kN/m, more preferably at least 7.8 kN/m, more preferably at least 7.9 kN/m, more preferably at least 8.0 kN/m, more preferably at least 8.1 kN/m, more preferably at least 8.2 kN/m, more preferably at least 8.3 kN/m, more preferably at least 8.4 kN/m, more preferably at least 8.5 kN/m, more preferably at least 8.6 kN/m, more preferably at least 8.7 kN/m, more preferably at least 8.8 kN/m, more preferably at least 8.9 kN/m, more preferably at least 9.0 kN/m, more preferably at least 9.1 kN/m, more preferably at least 9.2 kN/m, more preferably at least 9.3 kN/m, more preferably at least 9.4 kN/m, more preferably at least 9.5 kN/m, more preferably at least 9.6 kN/m, more preferably at least 9.7 kN/m, more preferably at least 9.8 kN/m, more preferably at least 9.9 kN/m, more preferably at least 10.0 kN/m, more preferably at least 10.5 kN/m, more preferably at least 11.0 kN/m, more preferably at least 11.5 kN/m, more preferably at least 12.0 kN/m, more preferably at least 12.5 kN/m, more preferably at least 13.0 kN/m, more preferably at least 13.5 kN/m, more preferably at least 14.0 kN/m, more preferably at least 14.5 kN/m, more preferably at least 15.0 kN/m, more preferably at least 15.5 kN/m, more preferably at least 16.0 kN/m, more preferably at least 16.5 kN/m, more preferably at least 17.0 kN/m, more preferably at least 17.5 kN/m, more preferably at least 18.0 kN/m, more preferably at least 18.5 kN/m, more preferably at least 19.0 kN/m, even more preferably at least 19.5 kN/m, most preferably at least 12.0 kN/m. This preferred embodiment is a 5^{th} embodiment of the invention, that preferably depends on any of the 1^{st}, 2^{nd} and 4^{th} embodiments of the invention.

Preferably, the first composite tensile strength or the further composite tensile strength or each of both is not more than 100 kN/m, preferably not more than 90 kN/m, more preferably not more than 80 kN/m, more preferably not more than 70 kN/m, even more preferably not more than 60 kN/m, most preferably not more than 50 kN/m. Of the above preferred values, each one is preferred for the first composite tensile strength and, independently from the value of first composite tensile strength, each of the values is preferred for the further composite tensile strength, either alone or in combination with any of the preferred values for the first composite tensile strength.

In a preferred embodiment of the sheet-like composite, the first tensile strength or the further tensile strength or each of both is at least 10 MPa, preferably at least 11 MPa, more preferably at least 12 MPa, more preferably at least 13 MPa, more preferably at least 14 MPa, more preferably at least 15 MPa, more preferably at least 16 MPa, more preferably at least 17 MPa, more preferably at least 18 MPa, more preferably at least 19 MPa, more preferably at least 20 MPa, more preferably at least 21 MPa, more preferably at least 22 MPa, more preferably at least 23 MPa, more preferably at least 24 MPa, more preferably at least 25 MPa, more preferably at least 26 MPa, preferably at least 27 MPa, more preferably at least 28 MPa, more preferably at least 29 MPa, more preferably at least 30 MPa, more preferably at least 31 MPa, more preferably at least 32 MPa, more preferably at least 33 MPa, more preferably at least 34 MPa, more preferably at least 35 MPa, more preferably at least 36 MPa, more preferably at least 37 MPa, more preferably at least 38 MPa, more preferably at least 39 MPa, more preferably at least 40 MPa, more preferably at least 41 MPa, more preferably at least 42 MPa, more preferably at least 43 MPa, more preferably at least 44 MPa, more preferably at least 45 MPa, more preferably at least 46 MPa, more preferably at least 47 MPa, more preferably at least 48 MPa, even more preferably at least 49 MPa, most preferably at least 50 MPa. This preferred embodiment is a 6^{th} embodiment of the invention, that preferably depends on any of the 2^{nd} to 5^{th} embodiments of the invention.

Preferably, the first tensile strength or the further tensile strength or each of both is not more than 100 MPa, preferably not more than 90 MPa, more preferably not more than 80 MPa, even more preferably not more than 70 MPa, most preferably not more than 60 MPa. Of the above preferred values, each one is preferred for the first tensile strength and, independently from the value of first tensile strength, each of the values is preferred for the further tensile strength, either alone or in combination with any of the preferred values for the first tensile strength.

In a preferred embodiment of the sheet-like composite, the partial sheet-like composite has a first composite tensile stiffness in the first composite direction and a further composite tensile stiffness in the further composite direction, wherein a ratio of the first composite tensile stiffness to the further composite tensile stiffness is in a range from 0.5 to less than 1.75, preferably from 0.6 to 1.70, more preferably from 0.7 to 1.70, more preferably from 0.8 to 1.70, more preferably from 0.90 to 1.70, more preferably from 1.00 to 1.70, more preferably from 1.10 to 1.70, more preferably from 1.20 to 1.65, more preferably from 1.25 to 1.60, more preferably from 1.30 to 1.55, even more preferably from 1.35 to 1.50. This preferred embodiment is a 7^{th} embodiment of the invention, that preferably depends on any of the 1^{st}, 2^{nd} and 4^{th} to 6^{th} embodiments of the invention.

In a preferred embodiment of the sheet-like composite, the barrier layer has a first Young's modulus in the first barrier layer direction and a further Young's modulus in the further barrier layer direction, wherein a ratio of the first Young's modulus to the further Young's modulus is in a range from 0.5 to 2.0, preferably from 0.6 to 2.0, more preferably from 0.6 to 1.9, more preferably from 0.7 to 1.9, more preferably from more than 0.7 to 1.8, more preferably from 0.8 to 1.8, more preferably from 0.8 to 1.7, even more preferably from 0.9 to 1.6, most preferably from 1.0 to 1.5. This preferred embodiment is an 8^{th} embodiment of the invention, that preferably depends on any of the 2^{nd} to 7^{th} embodiments of the invention.

In a preferred embodiment of the sheet-like composite, the partial sheet-like composite has a first composite tensile stiffness in the first composite direction and a further composite tensile stiffness in the further composite direction, wherein
a) the first composite tensile stiffness is in a range from 20 to 600 kN/m, preferably from 20 to 590 kN/m, more preferably from 20 to 580 kN/m, more preferably from 20 to 570 kN/m, more preferably from 20 to 560 kN/m, more preferably from 20 to 550 kN/m, more preferably from 20 to 540 kN/m, more preferably from 20 to 530 kN/m, more preferably from 20 to 520 kN/m, more preferably from 20 to 510 kN/m, more preferably from 20 to 500 kN/m, more preferably from 20 to 490 kN/m, more preferably from 20 to 480 kN/m, more preferably from 20 to 470 kN/m, more preferably from 20 to 460 kN/m, more preferably from 20 to 450 kN/m, more preferably from 20 to 440 kN/m, more preferably from 30 to 430 kN/m, more preferably from 40 to 420 kN/m, more preferably from 50 to 410 kN/m, more preferably from 50 to 400 kN/m, more preferably from 50 to 390 kN/m, more preferably from 50 to 380 kN/m, more preferably from 50 to 370 kN/m, more preferably from 50 to 360 kN/m, more preferably from 50 to 350 kN/m, more preferably from 50 to 340 kN/m, more preferably from 50 to 330 kN/m, more preferably from 50 to 320 kN/m, more preferably from 50 to 310 kN/m, more preferably from 50 to 300 kN/m, more preferably from 50 to 290 kN/m, more preferably from 50 to 280 kN/m, more preferably from 50 to 270 kN/m, more preferably from 50 to 260 kN/m, more preferably from 50 to 250 kN/m, more preferably from 50 to 240 kN/m, more preferably from 50 to 230 kN/m, more preferably from 50 to 220 kN/m, more preferably from 50 to 210 kN/m, more preferably from 50 to 200 kN/m, more preferably from 50 to 190 kN/m, more preferably from 50 to 180 kN/m, more preferably from 50 to 170 kN/m, more preferably from 60 to 160 kN/m, more preferably from 70 to 150 kN/m, more preferably from 80 to 140 kN/m, even more preferably from 90 to 130 kN/m, most preferably from 100 to 120 kN/m; or
b) the further composite tensile stiffness is in a range from 10 to 500 kN/m, preferably from10 to 490 kN/m, more preferably from 10 to 480 kN/m, more preferably from 10 to 470 kN/m, more preferably from 10 to 460 kN/m, more preferably from 10 to 450 kN/m, more preferably from 10 to 440 kN/m, more preferably from 10 to 430 kN/m, more preferably from 10 to 420 kN/m, more preferably from 10 to 410 kN/m, more preferably from 10 to 400 kN/m, more preferably from 10 to 390 kN/m, more preferably from 10 to 380 kN/m, more preferably from 10 to 370 kN/m, more preferably from 10 to 360 kN/m, more preferably from 10 to 350 kN/m, more preferably from 10 to 340 kN/m, more preferably from 10 to 330 kN/m, more preferably from 10 to 320 kN/m, more preferably from 10 to 310 kN/m, more preferably from 10 to 300 kN/m, more preferably from 10 to 290 kN/m, more preferably from 10 to 280 kN/m, more preferably from 10 to 270 kN/m, more preferably from 10 to 260 kN/m, more preferably from 10 to 250 kN/m, more preferably from 10 to 240 kN/m, more preferably from 10 to 230 kN/m, more preferably from 10 to 220 kN/m, more preferably from 10 to 210 kN/m, more preferably from 10 to 200 kN/m, more preferably from 10 to 190 kN/m, more preferably from 10 to 180 kN/m, more preferably from 10 to 170 kN/m, more preferably from 10 to 160 kN/m, more preferably from 10 to 150 kN/m, more preferably from 10 to 140 kN/m, more preferably from 20 to 130 kN/m, more preferably from 30 to 120 kN/m, more preferably from 40 to 110 kN/m, more preferably from 50 to 100 kN/m, even more preferably from 60 to 90 kN/m, most preferably from 70 to 80 kN/m; or
c) each of a) and b).

This preferred embodiment is a 9^{th} embodiment of the invention, that preferably depends on any of the 1^{st}, 2^{nd} and 4^{th} to 8^{th} embodiments of the invention.

In alternative c) above, each of the preferred values of alternative a) is preferred in combination with each of the preferred values of alternative b).

In a preferred embodiment of the sheet-like composite, the barrier layer has a first Young's modulus in the first barrier layer direction and a further Young's modulus in the further barrier layer direction, wherein
a: the first Young's modulus is in a range from 3,000 to 6,000 MPa, preferably from 3,200 to 5,800 MPa, more preferably from 3,400 to 5,600 MPa, more preferably from 3,500 to 5,500 MPa, more preferably from 3,600 to 5,400 MPa, more preferably from 3,700 to 5,300 MPa, more preferably from 3,800 to 5,200 MPa, even more preferably from 3,900 to 5,100 MPa, most preferably from 4,000 to 5,000 MPa; or
b: the further Young's modulus is in a range from 2,000 to 5,000 MPa, preferably from 2,100 to 4,900 MPa, more preferably from 2,200 to 4,800 MPa, more preferably from 2,300 to 4,700 MPa, more preferably from 2,400 to 4,600 MPa, more preferably from 2,500 to 4,500 MPa, more preferably from 2,600 to 4,400 MPa, more preferably from 2,700 to 4,300 MPa, more preferably from 2,800 to 4,200 MPa, more preferably from 2,900 to 4,100 MPa, more preferably from 3,000 to 4,000 MPa; or
c: each of a: and b:.

This preferred embodiment is a 10^{th} embodiment of the invention, that preferably depends on any of the 2^{nd} to 9^{th} embodiments of the invention.

In alternative c: above, each of the preferred values of alternative a: is preferred in combination with each of the preferred values of alternative b:.

In a preferred embodiment of the sheet-like composite, the barrier layer has a
a] layer thickness in the range from 10 to 50 µm,
   preferably from 10 to 45 µm, more preferably from 15 to 45 µm, more preferably from 15 to 40 µm, most preferably from 20 to 40 µm; or
b] a basis weight in the range from 10 to 60 g/m²,
   preferably from 10 to 55 g/m², more preferably from 10 to 50 g/m², more preferably from 15 to 50 g/m², more preferably from 15 to 45 g/m², even more preferably from 20 to 45 g/m², most preferably from 20 to 40 g/m²; or
c] each of a] and b].

This preferred embodiment is an 11^{th} embodiment of the invention, that preferably depends on any of the preceding embodiments of the invention.

In alternative c] above, each of the preferred values of alternative a] is preferred in combination with each of the preferred values of alternative b].

In a preferred embodiment of the sheet-like composite, the barrier layer provides a barrier action against the transmission of one selected from the group, consisting of oxygen, liquid water, water vapour, and aroma, or provides a combination of at least two of these. This preferred embodiment is a 12^{th} embodiment of the invention, that preferably depends on any of the preceding embodiments of the invention.

In a preferred embodiment of the sheet-like composite, the partial sheet-like composite has
a> an oxygen transmission rate of not more than 10.0 cm³ / (m² · day), preferably not more than 9.5 cm³ / (m² · day), more preferably not more than 9.0 cm³ / (m² · day), more preferably not more than 8.5 cm³ / (m² · day), more preferably not more than 8.0 cm³ / (m² · day), more preferably not more than 7.5 cm³ / (m² · day), more preferably not more than 7.0 cm³ / (m² · day), more preferably not more than 6.5 cm³ / (m² · day), more preferably not more than 6.0 cm³ / (m² · day), more preferably not more than 5.5 cm³ / (m² · day), more preferably not more than 5.0 cm³ / (m² · day), more preferably not more than 4.5 cm³ / (m² · day), more preferably not more than 4.0 cm³ / (m² · day), more preferably not more than 3.5 cm³ / (m² · day), more preferably not more than 3.0 cm³ / (m² · day), more preferably not more than 2.5 cm³ / (m² · day), more preferably not more than 2.0 cm³ / (m² · day), more preferably not more than 1.5 cm³ / (m² · day), even more preferably not more than 1.0 cm³ / (m² · day), most preferably not more than 0.5 cm³ / (m² · day); or
b> a water vapour transmission rate of not more than 1.5 g / (m² · day), preferably not more than 1.4 g / (m² · day), more preferably not more than 1.3 g / (m² · day), more preferably not more than 1.2 g / (m² · day), more preferably not more than 1.1 g / (m² · day), more preferably not more than 1.0 g / (m² · day), more preferably not more than 0.9 g / (m² · day), more preferably not more than 0.8 g / (m² · day), more preferably not more than 0.7 g / (m² · day), more preferably not more than 0.6 g / (m² · day), more preferably not more than 0.5 g / (m² · day), more preferably not more than 0.4 g / (m² · day), more preferably not more than 0.2 g / (m² · day), even more preferably not more than 0.2 g / (m² · day), most preferably not more than 0.1 g / (m² · day); or
c> each of a> and b>.

This preferred embodiment is a 13^{th} embodiment of the invention, that preferably depends on any of the 1^{st}, 2^{nd} and 4^{th} to 12^{th} embodiments of the invention.

In alternative c> above, each of the preferred values of alternative a> is preferred in combination with each of the preferred values of alternative b>.

In a preferred embodiment of the sheet-like composite, the barrier layer has
a} an oxygen transmission rate of not more than 10.0 cm³ / (m² · day), preferably not more than 9.5 cm³ / (m² · day), more preferably not more than 9.0 cm³ / (m² · day), more preferably not more than 8.5 cm³ / (m² · day), more preferably not more than 8.0 cm³ / (m² · day), more preferably not more than 7.5 cm³ / (m² · day), more preferably not more than 7.0 cm³ / (m² · day), more preferably not more than 6.5 cm³ / (m² · day), more preferably not more than 6.0 cm³ / (m² · day), more preferably not more than 5.5 cm³ / (m² · day), more preferably not more than 5.0 cm³ / (m² · day), more preferably not more than 4.5 cm³ / (m² · day), more preferably not more than 4.0 cm³ / (m² · day), more preferably not more than 3.5 cm³ / (m² · day), more preferably not more than 3.0 cm³ / (m² · day), more preferably not more than 2.5 cm³ / (m² · day), more preferably not more than 2.0 cm³ / (m² · day), more preferably not more than 1.5 cm³ / (m² · day), even more preferably not more than 1.0 cm³ / (m² · day), most preferably not more than 0.5 cm³ / (m² · day); or
b} a water vapour transmission rate of not more than 1.5 g / (m² · day), preferably not more than 1.4 g / (m² · day), more preferably not more than 1.3 g / (m² · day), more preferably not more than 1.2 g / (m² · day), more preferably not more than 1.1 g / (m² · day), more preferably not more than 1.0 g / (m² · day), more preferably not more than 0.9 g / (m² · day), more preferably not more than 0.8 g / (m² · day), more preferably not more than 0.7 g / (m² · day), more preferably not more than 0.6 g / (m² · day), more preferably not more than 0.5 g / (m² · day), more preferably not more than 0.4 g / (m² · day), more preferably not more than 0.2 g / (m² · day), even more preferably not more than 0.2 g / (m² · day), most preferably not more than 0.1 g / (m² · day); or
c} each of a} and b}.

This preferred embodiment is a 14^{th} embodiment of the invention, that preferably depends on any of the preceding embodiments of the invention.

In alternative c} above, each of the preferred values of alternative a} is preferred in combination with each of the preferred values of alternative b}.

In a preferred embodiment of the sheet-like composite, the barrier layer comprises less than 50 wt.-%, preferably less than 40 wt.-%, more preferably less than 30 wt.-%, more preferably less than 20 wt.-%, more preferably less than 10 wt.-%, more preferably less than 5 wt.-%, more preferably less than 3 wt.-%, even more preferably less than 1 wt.-%, of one selected from the group, consisting of aluminium, aluminium oxide, and silicon oxide, or of each of a combination of at least two thereof, preferably of one selected from the group, consisting of all metals in sum, all metal oxides ins sum, and all semi-metal oxides in sum, or of each of a combination of at least two thereof, based in each case on the total weight of the barrier layer. This preferred embodiment is a 15^{th} embodiment of the invention, that preferably depends on any of the preceding embodiments of the invention.

Most preferably, the barrier layer is free from one selected from the group, consisting of aluminium, aluminium oxide, and silicon oxide, or from each of a combination of at least two thereof, preferably from one selected from the group, consisting of metal, metal oxide, and semi-metal oxide, or from each of a combination of at least two thereof.

In a preferred embodiment of the sheet-like composite, the barrier layer comprises less than 90 wt.-%, preferably less than 80 wt.-%, more preferably less than 70 wt.-%, more preferably less than 60 wt.-%, more preferably less than 50 wt.-%, more preferably less than 40 wt.-%, more preferably less than 30 wt.-%, more preferably less than 20 wt.-%, even more preferably less than 10 wt.-%, most preferably less than 5 wt.-%, of any single polyolefin or of any single polycondensate or of each of both, preferably of all polyolefins in sum, or of all polycondensates in sum, or each of both, based in each case on the total weight of the barrier layer. This preferred embodiment is a 16^{th} embodiment of the invention, that preferably depends on any of the preceding embodiments of the invention.

In a preferred embodiment of the sheet-like composite, the barrier layer has a moisture content in a range from 3.0 to 10.0 wt.-%, preferably from 3.5 to 9.5 wt.-%, more preferably from 4.0 to 9.0 wt.-%, more preferably from 4.5 to 9.0 wt.-%, more preferably from 5.0 to 9.0 wt.-%, more preferably from 5.5 to 8.5 wt.-%, even more preferably from 6.0 to 8.0 wt.-%, based in each case on the total weight of the barrier layer. This preferred embodiment is a 17^{th} embodiment of the invention, that preferably depends on any of the preceding embodiments of the invention.

If the plurality of fibres is MFC, the moisture content of the barrier layer tends to drop below the preceding ranges. A barrier layer this dry shows an increased risk of cracking in folding the sheet-like composite. If measures are taken to keep the moisture content of the barrier layer in the preceding ranges, this risk is reduced. It follows that a moisture content of the barrier layer in the preceding ranges allows to more reliably produce containers with high shelf-life from the sheet-like composite.

In a preferred embodiment of the sheet-like composite, the barrier layer comprises the plurality of fibres in a proportion in a range from 50 to 100 wt.-%, preferably from 50 to less than 100 wt.-%, more preferably from 60 to 95 wt.-%, more preferably from 70 to 90 wt.-%, based in each case on the weight of the total solids content of the barrier layer. This preferred embodiment is an 18^{th} embodiment of the invention, that preferably depends on any of the preceding embodiments of the invention.

In a preferred embodiment of the sheet-like composite, the fibres of the plurality of fibres have
a/ an average length in a range from 0.5 to 100 µm, preferably from 0.6 to 90 µm, more preferably from 0.7 to 80 µm, more preferably from 0.8 to 70 µm, even more preferably from 0.9 to 60 µm, most preferably from 1.0 to 50 µm; or
b/ an average diameter of less than 1 µm, preferably less than 900 nm, more preferably less than 800 nm, more preferably less than 700 nm, more preferably less than 600 nm, more preferably less than 500 nm, more preferably less than 400 nm, more preferably less than 300 nm, even more preferably less than 200 nm, most preferably less than 100 nm; or
c/ an average aspect ratio of at least 10, preferably at least 50, more preferably at least 100; most preferably at least 150; or
d/ a combination of at least two of a/ to c/, preferably of all of these.

This preferred embodiment is a 19^{th} embodiment of the invention, that preferably depends on any of the preceding embodiments of the invention.

In alternative d/ above, each of the preferred values of alternatives a/, b/ and c/ is preferred in combination with each of the preferred values of the respective other alternatives. The average aspect ratio of fibres means the ratio of the average length of the fibres to the average diameter of the fibres.

In a preferred embodiment of the sheet-like composite, on a side of the barrier layer which faces the outer surface, or on a side of the barrier layer which faces the inner surface, or on each of both the barrier layer has a specific surface area according to BET in a range from 1 to 300 m²/g, preferably from 1 to 200 m²/g, more preferably from 50 to 200 m²/g. This preferred embodiment is a 20^{th} embodiment of the invention, that preferably depends on any of the preceding embodiments of the invention.

In a preferred embodiment of the sheet-like composite, the fibres of the plurality of fibres are plant fibres. This preferred embodiment is a 21^{st} embodiment of the invention, that preferably depends on any of the preceding embodiments of the invention.

In a preferred embodiment of the sheet-like composite, the fibres of the plurality of fibres are one selected from the group, consisting of cellulose fibres, lignocellulose fibres, and hemicellulose fibres, or a combination of at least two thereof. This preferred embodiment is a 22^{nd} embodiment of the invention, that preferably depends on any of the preceding embodiments of the invention.

In a preferred embodiment of the sheet-like composite, the plurality of fibres constitutes a three-dimensional network or a two-dimensional network. This preferred embodiment is a 23^{rd} embodiment of the invention, that preferably depends on any of the preceding embodiments of the invention.

A three-dimensional network of fibres means that the fibres of the plurality of fibres form a three-dimensional skeletal structure of interconnected fibres with cavities between the fibres. A two-dimensional network of fibres means that the fibres of the plurality of fibres form a sheet-like reticulated structure of interconnected fibres with holes between the fibres.

In a preferred embodiment of the sheet-like composite, the plurality of fibres is microfibrillated cellulose. This preferred embodiment is a 24^{th} embodiment of the invention, that preferably depends on any of the preceding embodiments of the invention.

In a preferred embodiment of the sheet-like composite, the first inner polymer layer comprises at least one, preferably thermoplastic, polymer in a proportion of at least 70 wt.-%, preferably at least 80 wt.-%, more preferably at least 90 wt.-%, more preferably at least 95 wt.-%, more preferably at least 97 wt.-%, more preferably at least 98 wt.-%, even more preferably at least 99 wt.- %, most preferably 100 wt.-%, based in each case on the total weight of the first inner polymer layer. This preferred embodiment is a 25^{th} embodiment of the invention, that preferably depends on any of the preceding embodiments of the invention.

In a preferred embodiment of the sheet-like composite, the at least one polymer is at least one polyolefin. This preferred embodiment is a 26^{th} embodiment of the invention, that preferably depends on the 25^{th} embodiment of the invention.

In a preferred embodiment of the sheet-like composite, the at least one polyolefin is polyethylene or polypropylene or a mixture of both. This preferred embodiment is a 27^{th} embodiment of the invention, that preferably depends on the 26^{th} embodiment of the invention.

In a preferred embodiment of the sheet-like composite, the polyethylene is LDPE. This preferred embodiment is a 28^{th} embodiment of the invention, that preferably depends on the 27^{th} embodiment of the invention.

In a preferred embodiment of the sheet-like composite, the first inner polymer layer comprises a blend of a first, preferably thermoplastic, polymer and a further, preferably thermoplastic, polymer. This preferred embodiment is a 29^{th} embodiment of the invention, that preferably depends on any of the 1^{st} to 24^{th} embodiments of the invention.

In a preferred embodiment of the sheet-like composite, the first inner polymer layer comprises the blend in a proportion of at least 70 wt.-%, preferably at least 80 wt.-%, more preferably at least 90 wt.-%, more preferably at least 95 wt.-%, more preferably at least 97 wt.-%, more preferably at least 98 wt.-%, even more preferably at least 99 wt.-%, most preferably 100 wt.-%, based in each case on the total weight of the first inner polymer layer. This preferred embodiment is a 30^{th} embodiment of the invention, that preferably depends on the 29^{th} embodiment of the invention.

In a preferred embodiment of the sheet-like composite, the first polymer is a first polyolefin or the further polymer is a further polyolefin or both. This preferred embodiment is a 31^{st} embodiment of the invention, that preferably depends on the 29^{th} or 30^{th} embodiment of the invention.

In a preferred embodiment of the sheet-like composite, the first polyolefin is a first polyethylene or the further polyolefin or is a further polyethylene or both. This preferred embodiment is a 32^{nd} embodiment of the invention, that preferably depends on the 31^{st} embodiment of the invention.

Preferably, the first polyethylene is different from the further polyethylene.

In a preferred embodiment of the sheet-like composite, the first polyethylene is LDPE or the further polyethylene is mPE or both. This preferred embodiment is a 33^{rd} embodiment of the invention, that preferably depends on the 32^{nd} embodiment of the invention.

In a preferred embodiment of the sheet-like composite, the first inner polymer layer comprises
- the first polymer in a proportion in the range from 10 to 50 wt.-%, preferably from 15 to 45 wt.-%, more preferably from 20 to 40 wt.-%, most preferably from 25 to 35 wt.-%, in each case based on the total wight of the blend; or
- the further polymer in a proportion in the range from 50 to 90 wt.-%, preferably from 55 to 85 wt.-%, more preferably from 60 to 80 wt.-%, most preferably from 65 to 75 wt.-%, in each case based on the total wight of the blend; or
- both.

This preferred embodiment is a 34^{th} embodiment of the invention, that preferably depends on any of the 29^{th} to 33^{rd} embodiments of the invention.

In a preferred embodiment of the sheet-like composite, the first inner polymer layer comprises
- the first polymer in a proportion in the range from 50 to 90 wt.-%, preferably from 55 to 85 wt.-%, more preferably from 60 to 80 wt.-%, most preferably from 65 to 75 wt.-%, in each case based on the total wight of the blend; or
- the further polymer in a proportion in the range from 10 to 50 wt.-%, preferably from 15 to 45 wt.-%, more preferably from 20 to 40 wt.-%, most preferably from 25 to 35 wt.-%, in each case based on the total wight of the blend; or
- both.

This preferred embodiment is a 35^{th} embodiment of the invention, that preferably depends on any of the 29^{th} to 33^{rd} embodiments of the invention.

In a preferred embodiment of the sheet-like composite, the layer sequence comprises a further inner polymer layer between the barrier layer and the first inner polymer layer. This preferred embodiment is a 36^{th} embodiment of the invention, that preferably depends on any of the preceding embodiments of the invention.

In a preferred embodiment of the sheet-like composite, the further inner polymer layer comprises at least one, preferably thermoplastic, polymer in a proportion of at least 70 wt.-%, preferably at least 80 wt.-%, more preferably at least 90 wt.-%, more preferably at least 95 wt.-%, more preferably at least 97 wt.-%, more preferably at least 98 wt.-%, even more preferably at least 99 wt.-%, most preferably 100 wt.-%, based in each case on the total weight of the further inner polymer layer. This preferred embodiment is a 37^{th} embodiment of the invention, that preferably depends on the 36^{th} embodiment of the invention.

In a preferred embodiment of the sheet-like composite, the at least one polymer in the further inner polymer layer is at least one polyolefin. This preferred embodiment is a 38^{th} embodiment of the invention, that preferably depends on the 37^{th} embodiment of the invention.

In a preferred embodiment of the sheet-like composite, the at least one polyolefin in the further inner polymer layer is polyethylene or polypropylene or a mixture of both. This preferred embodiment is a 39^{th} embodiment of the invention, that preferably depends on the 38^{th} embodiment of the invention.

In a preferred embodiment of the sheet-like composite, the polyethylene in the further inner polymer layer is LDPE. This preferred embodiment is a 40^{th} embodiment of the invention, that preferably depends on the 39^{th} embodiment of the invention.

In a preferred embodiment of the sheet-like composite, the layer sequence comprises a first adhesion promoter layer between the carrier layer and the barrier layer, or a further adhesion promoter layer between the barrier layer and the first inner polymer layer, preferably between the barrier layer and the further inner polymer layer, or comprises the first adhesion promoter layer and the further adhesion promoter layer. This preferred embodiment is a 41^{st} embodiment of the invention, that preferably depends on any of the preceding embodiments of the invention.

In a preferred embodiment of the sheet-like composite, the layer sequence comprises an outer polymer layer, which is superimposed to the carrier layer on a side of the carrier layer that faces the outer surface. This preferred embodiment is a 42^{nd} embodiment of the invention, that preferably depends on any of the preceding embodiments of the invention.

In a preferred embodiment of the sheet-like composite, the outer polymer layer comprises at least one, preferably thermoplastic, polymer in a proportion of at least 70 wt.-%, preferably at least 80 wt.-%, more preferably at least 90 wt.-%, more preferably at least 95 wt.-%, more preferably at least 97 wt.-%, more preferably at least 98 wt.-%, even more preferably at least 99 wt.- %, most preferably 100 wt.-%, based in each case on the total weight of the outer polymer layer. This preferred embodiment is a 43^{rd} embodiment of the invention, that preferably depends on the 42^{nd} embodiment of the invention.

In a preferred embodiment of the sheet-like composite, the at least one polymer in the outer polymer layer is at least one polyolefin. This preferred embodiment is a 44^{th} embodiment of the invention, that preferably depends on the 43^{rd} embodiment of the invention.

In a preferred embodiment of the sheet-like composite, wherein the at least one polyolefin in the outer polymer layer is polyethylene or polypropylene or a mixture of both. This preferred embodiment is a 45^{th} embodiment of the invention, that preferably depends on the 44^{th} embodiment of the invention.

In a preferred embodiment of the sheet-like composite, the polyethylene in the outer polymer layer is LDPE or HDPE or a mixture of both. This preferred embodiment is a 46^{th} embodiment of the invention, that preferably depends on the 45^{th} embodiment of the invention.

In a preferred embodiment of the sheet-like composite, the sheet-like composite comprises a colour application, which is superimposed to the carrier layer on a side of the carrier layer that faces the outer surface. This preferred embodiment is a 47^{th} embodiment of the invention, that preferably depends on any of the preceding embodiments of the invention.

In a preferred embodiment of the sheet-like composite, the carrier layer comprises, preferably consists of, one selected from the group consisting of cardboard, paperboard and paper, or a combination of at least two of these. This preferred embodiment is a 48^{th} embodiment of the invention, that preferably depends on any of the preceding embodiments of the invention.

In a preferred embodiment of the sheet-like composite, the sheet-like composite includes a plurality of arrangements of groove lines in the carrier layer, wherein for each of the arrangements of groove lines a, preferably closed, container is obtainable from an area of the sheet-like composite by folding along the groove lines of the arrangement of groove lines and joining surface areas of the area to one another. This preferred embodiment is a 49^{th} embodiment of the invention, that preferably depends on any of the preceding embodiments of the invention.

In a preferred embodiment of the sheet-like composite, at least one, preferably each, of the arrangements of the plurality of arrangements of groove lines comprises at least one transversal groove line, which runs perpendicular to a direction of a height of the container, which is obtainable from an area of the sheet-like composite by folding along the groove lines of the respective arrangement of groove lines and joining surface areas of the area to one another; wherein the at least one transversal groove line runs at an angle
- in a range from 80 to 100°, preferably from 85 to 95°, more preferably from 87 to 93°, or
- in a range from -10 to +10°, preferably from -5 to +5°, more preferably from -3 to +3°
to a length of the sheet-like composite. This preferred embodiment is a 50^{th} embodiment of the invention, that preferably depends on the 49^{th} embodiment of the invention.

A 51^{st} embodiment of the invention is a method for producing a sheet-like composite (100), the method (300) comprising as method steps:
A. providing
   - a sheet-like composite precursor comprising a carrier layer, and
   - a barrier layer which comprises a plurality of fibres;
B. laminating the barrier layer to the carrier layer on a side of the carrier layer, which in the sheet-like composite faces an inner surface of the sheet-like composite, and superimposing a first inner polymer layer to the barrier layer on a side of the barrier layer, which in the sheet-like composite faces the inner surface;

wherein a partial sheet-like composite consists of only the layers of the sheet-like composite, which are arranged on a side of the carrier layer facing the inner surface; wherein the partial sheet-like composite
   - has a first composite direction in a composite plane of the partial sheet-like composite,
   - a further composite direction, which is also in the composite plane of the partial sheet-like composite, but perpendicular to the first composite direction,
   - a first composite tensile strength in the first composite direction, and
   - a further composite tensile strength in the further composite direction;
wherein a ratio of the first composite tensile strength to the further composite tensile strength is in a range from more than 0.5 to 1.9, preferably from more than 0.5 to 1.8, more preferably from more than 0.5 to 1.7, more preferably from 0.6 to 1.6, more preferably from 0.7 to 1.5, more preferably from 0.8 to 1.4, more preferably from 0.9 to 1.3, more preferably from more than 0.9 to 1.2, more preferably from 1.0 to 1.2, even more preferably from 1 to 1.1. Alternatively preferred, the ratio of the first composite tensile strength to the further composite tensile strength is in a range in a range from 0.6 to 1.9, preferably from 0.7 to 1.8, more preferably from 0.8 to 1.7, more preferably from 0.9 to 1.6, more preferably from 1.0 to 1.5, more preferably from 1.1 to 1.4, more preferably from more than 1.2 to 1.4, even more preferably from 1.2 to less than 1.4. Preferably, the laminating the barrier layer to the carrier layer is conducted prior to superimposing the first inner polymer layer to the barrier layer. The sheet-like composite preferably is the sheet-like composite of the invention according to any of its embodiments. The carrier layer preferably has one or more features of the carrier layer of the sheet-like composite of the invention according to any of its embodiments. Preferably, the carrier layer is the carrier layer of the sheet-like composite of the invention according to any of its embodiments. The barrier layer preferably has one or more features of the barrier layer of the sheet-like composite of the invention according to any of its embodiments. Preferably, the barrier layer is the barrier layer of the sheet-like composite of the invention according to any of its embodiments. The first inner polymer layer preferably has one or more features of the first inner polymer layer of the sheet-like composite of the invention according to any of its embodiments. Preferably, the first inner polymer layer is the first inner polymer layer of the sheet-like composite of the invention according to any of its embodiments.

In a preferred embodiment of the method, in the method step A. the barrier layer has a first tensile strength in a first barrier layer direction, and a further tensile strength in a further barrier layer direction, which is perpendicular to the first barrier layer direction; wherein a ratio of the first tensile strength to the further tensile strength is in a range from more than 0.5 to less than 1.7, preferably from 0.6 to 1.6, more preferably from 0.7 to 1.5, more preferably from 0.8 to 1.4, more preferably from 0.9 to less than 1.4, more preferably from 0.9 to 1.3, more preferably from more than 0.9 to 1.2, more preferably from 1 to 1.2, even more preferably from 1 to 1.1. Alternatively preferred, the ratio of the first tensile strength to the further tensile strength is in a range from 0.6 to 1.7, more preferably from 0.7 to 1.7, more preferably from 0.8 to 1.6, more preferably from 0.9 to 1.5, more preferably from 1.0 to less than 1.4, even more preferably from 1.1 to 1.3. This preferred embodiment is a 52^{nd} embodiment of the invention, that preferably depends on the 51^{st} embodiment of the invention.

A 53^{rd} embodiment of the invention is a method for producing a sheet-like composite, the method (300) comprising as method steps:
A. providing
   - a sheet-like composite precursor comprising a carrier layer, and
   - a barrier layer;
B. laminating the barrier layer to the carrier layer on a side of the carrier layer, which in the sheet-like composite faces an inner surface of the sheet-like composite, and superimposing a first inner polymer layer to the barrier layer on a side of the barrier layer, which in the sheet-like composite faces the inner surface;

wherein in the method step A. the barrier layer
   - comprises a plurality of fibres,
   - has a first tensile strength in a first barrier layer direction, and
   - a further tensile strength in a further barrier layer direction, which is perpendicular to the first barrier layer direction;
wherein a ratio of the first tensile strength to the further tensile strength is in a range from more than 0.5 to less than 1.7, preferably from 0.6 to 1.6, more preferably from 0.7 to 1.5, more preferably from 0.8 to 1.4, more preferably from 0.9 to less than 1.4, more preferably from 0.9 to 1.3, more preferably from more than 0.9 to 1.2, more preferably from 1 to 1.2, even more preferably from 1 to 1.1. Alternatively preferred, the ratio of the first tensile strength to the further tensile strength is in a range from 0.6 to 1.7, more preferably from 0.7 to 1.7, more preferably from 0.8 to 1.6, more preferably from 0.9 to 1.5, more preferably from 1.0 to less than 1.4, even more preferably from 1.1 to 1.3. Preferably, the laminating the barrier layer to the carrier layer is conducted prior to superimposing the first inner polymer layer to the barrier layer. The sheet-like composite preferably is the sheet-like composite of the invention according to any of its embodiments. The carrier layer preferably has one or more features of the carrier layer of the sheet-like composite of the invention according to any of its embodiments. Preferably, the carrier layer is the carrier layer of the sheet-like composite of the invention according to any of its embodiments. The barrier layer preferably has one or more features of the barrier layer of the sheet-like composite of the invention according to any of its embodiments. Preferably, the barrier layer is the barrier layer of the sheet-like composite of the invention according to any of its embodiments. The first inner polymer layer preferably has one or more features of the first inner polymer layer of the sheet-like composite of the invention according to any of its embodiments. Preferably, the first inner polymer layer is the first inner polymer layer of the sheet-like composite of the invention according to any of its embodiments.

In a preferred embodiment of the method, a partial sheet-like composite consists of only the layers of the sheet-like composite, which are arranged on a side of the carrier layer facing the inner surface; wherein the partial sheet-like composite
- has a first composite direction in a composite plane of the partial sheet-like composite,
- a further composite direction, which is also in the composite plane of the partial sheet-like composite, but perpendicular to the first composite direction,
- a first composite tensile strength in the first composite direction, and
- a further composite tensile strength in the further composite direction;
wherein a ratio of the first composite tensile strength to the further composite tensile strength is in a range from more than 0.5 to 1.9, preferably from more than 0.5 to 1.8, more preferably from more than 0.5 to 1.7, more preferably from 0.6 to 1.6, more preferably from 0.7 to 1.5, more preferably from 0.8 to 1.4, more preferably from 0.9 to 1.3, more preferably from more than 0.9 to 1.2, more preferably from 1.0 to 1.2, even more preferably from 1 to 1.1. Alternatively preferred, the ratio of the first composite tensile strength to the further composite tensile strength is in a range in a range from 0.6 to 1.9, preferably from 0.7 to 1.8, more preferably from 0.8 to 1.7, more preferably from 0.9 to 1.6, more preferably from 1.0 to 1.5, more preferably from 1.1 to 1.4, more preferably from more than 1.2 to 1.4, even more preferably from 1.2 to less than 1.4. This preferred embodiment is a 54^{th} embodiment of the invention, that preferably depends on the 53^{rd} embodiment of the invention.

In a preferred embodiment of the method, the method step A. further comprises providing a first inner polymer layer composition, wherein the method step B. comprises melt extruding the first inner polymer layer composition. This preferred embodiment is a 55^{th} embodiment of the invention, that preferably depends on any of the 51^{st} to 54^{th} embodiments of the invention.

In a preferred embodiment of the method, the method step A. further comprises providing a first adhesion promoter composition, wherein in the method step B. the barrier layer is laminated to the carrier layer with the first adhesion promoter composition as laminating agent, thereby obtaining a first adhesion promoter layer from the first adhesion promoter composition. This preferred embodiment is a 56^{th} embodiment of the invention, that preferably depends on any of the 51^{st} to 55^{th} embodiments of the invention.

The first adhesion promoter layer preferably has one or more features of the first adhesion promoter layer of the sheet-like composite of the invention according to any of its embodiments. Preferably, the first adhesion promoter layer is the first adhesion promoter layer of the sheet-like composite of the invention according to any of its embodiments.

In a preferred embodiment of the method, in the method step B. a further inner polymer layer is superimposed to the barrier layer on the side of the barrier layer, which in the sheet-like composite faces the inner surface, and the first inner polymer layer is superimposed to the further inner polymer layer on a side of the further inner polymer layer, which in the sheet-like composite faces the inner surface. This preferred embodiment is a 57^{th} embodiment of the invention, that preferably depends on any of the 51^{st} to 56^{th} embodiments of the invention.

The further inner polymer layer preferably has one or more features of the further inner polymer layer of the sheet-like composite of the invention according to any of its embodiments. Preferably, the further inner polymer layer is the further inner polymer layer of the sheet-like composite of the invention according to any of its embodiments.

In a preferred embodiment of the method, the method step A. further comprises providing a further inner polymer layer composition, wherein superimposing the further inner polymer layer to the barrier layer comprises melt extruding the further inner polymer layer composition. This preferred embodiment is a 58^{th} embodiment of the invention, that preferably depends on the 57^{th} embodiment of the invention.

In a preferred embodiment of the method, the method step B. comprises coextruding at least the first inner polymer layer composition and the further inner polymer layer composition. This preferred embodiment is a 59^{th} embodiment of the invention, that preferably depends on the 58^{th} embodiment of the invention.

In a preferred embodiment of the method, in the method step B. a further adhesion promoter layer is superimposed to the barrier layer on the side of the barrier layer, which in the sheet-like composite faces the inner surface, and the first inner polymer layer is superimposed to the further adhesion promoter layer on a side of the further adhesion promoter layer, which in the sheet-like composite faces the inner surface. This preferred embodiment is a 60^{th} embodiment of the invention, that preferably depends on any of the 51^{st} to 59^{th} embodiments of the invention.

Preferably, the further inner polymer layer is also superimposed to the further adhesion promoter layer on the side of the further adhesion promoter layer, which in the sheet-like composite faces the inner surface. The further adhesion promoter layer preferably has one or more features of the further adhesion promoter layer of the sheet-like composite of the invention according to any of its embodiments. Preferably, the further adhesion promoter layer is the further adhesion promoter layer of the sheet-like composite of the invention according to any of its embodiments.

In a preferred embodiment of the method, the method step A. further comprises providing a further adhesion promoter composition, wherein superimposing the further adhesion promoter layer to the barrier layer comprises melt extruding the further adhesion promoter composition. This preferred embodiment is a 61^{st} embodiment of the invention, that preferably depends on the 60^{th} embodiment of the invention.

In a preferred embodiment of the method, the method step C. comprises coextruding at least the further adhesion promoter composition, the first inner polymer layer composition and the further inner polymer layer composition. This preferred embodiment is a 62^{nd} embodiment of the invention, that preferably depends on the 61^{st} embodiment of the invention.

In a preferred embodiment of the method, the method further comprises superimposing an outer polymer layer to the carrier layer on a side of the carrier layer, which in the sheet-like composite faces an outer surface of the sheet-like composite. This preferred embodiment is a 63^{rd} embodiment of the invention, that preferably depends on any of the 51^{st} to 62^{nd} embodiments of the invention.

The outer polymer layer preferably has one or more features of the outer polymer layer of the sheet-like composite of the invention according to any of its embodiments. Preferably, the outer polymer layer is the outer polymer layer of the sheet-like composite of the invention according to any of its embodiments. The outer surface of the sheet-like composite is opposite the inner surface. Superimposing the outer polymer layer to the carrier layer is preferably conducted prior to the method step B.

In a preferred embodiment of the method, the method step A. further comprises providing an outer polymer layer composition, wherein superimposing the outer polymer layer to the carrier layer comprises melt extruding the outer polymer layer composition. This preferred embodiment is a 64^{th} embodiment of the invention, that preferably depends on the 63^{rd} embodiment of the invention.

In a preferred embodiment of the method, the method comprises an additional step of superimposing a colour application to the carrier layer on a side of the carrier layer, which in the sheet-like composite faces an outer surface of the sheet-like composite. This preferred embodiment is a 65^{th} embodiment of the invention, that preferably depends on any of the 51^{st} to 64^{th} embodiments of the invention.

In a preferred embodiment, this step is conducted after the method step B., preferably prior to creating the plurality of arrangements of groove lines in the carrier layer. In a further preferred embodiment, this step is conducted prior to the method step B., preferably prior to superimposing the outer polymer layer to the carrier layer, additionally or alternatively preferred prior to creating the plurality of arrangements of groove lines in the carrier layer. Preferably, the colour application is superimposed by a printing method. The colour application preferably has one or more features of the colour application of the sheet-like composite of the invention according to any of its embodiments. Preferably, the colour application is the colour application of the sheet-like composite of the invention according to any of its embodiments.

In a preferred embodiment of the method, the method further comprises a step of creating a plurality of arrangements of groove lines in the carrier layer, wherein for each of the arrangements of groove lines a, preferably closed, container is obtainable from an area of the sheet-like composite by folding along the groove lines of the arrangement of groove lines and joining surface areas of the area to one another. This preferred embodiment is a 66^{th} embodiment of the invention, that preferably depends on any of the 51^{st} to 65^{th} embodiments of the invention.

In a preferred embodiment, this step is conducted after the method step B., preferably after superimposing the colour application to the carrier layer. In a further preferred embodiment, this step is conducted prior to the method step B., preferably prior to superimposing the outer polymer layer to the carrier layer, additionally or alternatively preferred after superimposing the colour application to the carrier layer.

In a preferred embodiment of the method, at least one, preferably each, of the arrangements of the plurality of arrangements of groove lines comprises at least one transversal groove line, which runs perpendicular to a direction of a height of the container, which is obtainable from an area of the sheet-like composite by folding along the groove lines of the respective arrangement of groove lines and joining surface areas of the area to one another;
wherein the at least one transversal groove line runs at an angle
- in a range from 80 to 100°, preferably from 85 to 95°, more preferably from 87 to 93°, or
- in a range from -10 to +10°, preferably from -5 to +5°, more preferably from -3 to +3°
to a length of the sheet-like composite. This preferred embodiment is a 67^{th} embodiment of the invention, that preferably depends on the 66^{th} embodiment of the invention.

In a preferred embodiment of the method, the method comprises a further method step C. of either
i. rolling-up the sheet-like composite to a roll, or
ii. separating at least part of the sheet-like composite into a multitude of blanks, wherein each of the blanks is for production of a single, preferably closed, container.

This preferred embodiment is a 68^{th} embodiment of the invention, that preferably depends on any of the 51^{st} to 67^{th} embodiments of the invention.

Preferably, the sheet-like composite is rolled-up in a direction of the length of the sheet-like composite. Preferably, in the alternative ii., separating is effected by die-cutting.

In a preferred embodiment of the method, each of the blanks comprises exactly one of the arrangements of groove lines of the plurality of arrangements of groove lines. This preferred embodiment is a 69^{th} embodiment of the invention, that preferably depends on the 68^{th} embodiment of the invention.

A 70^{th} embodiment of the invention is a sheet-like composite which is obtainable by the method according to any of the 51^{st} to 67^{th} embodiments of the invention.

A 71^{st} embodiment of the invention is a roll or a blank, which in each case is obtainable by the method according to the 68^{th} or 69^{th} embodiment of the invention.

A 72^{nd} embodiment of the invention is a roll which comprises the sheet-like composite according to any of the 1^{st} to 50^{th} and 70^{th} embodiments of the invention in a rolled-up state.

Preferably, the sheet-like composite is rolled-up in a direction of the length of the sheet-like composite.

A 73^{rd} embodiment of the invention is a blank of the sheet-like composite according to any of the 1^{st} to 50^{th} and 70^{th} embodiments of the invention, wherein the blank includes exactly one arrangement of groove lines in the carrier layer, wherein a single, preferably closed, container is obtainable from the blank by folding the blank along the groove lines of the arrangement of groove lines and joining surface areas of the blank to one another.

A preferred blank is for production of a single, preferably closed, container.

A 74^{th} embodiment of the invention is a container precursor comprising the blank according to the 71^{st} or 73^{rd} embodiment of the invention, wherein the blank comprises a first longitudinal rim and a further longitudinal rim, wherein the first longitudinal rim is joined to the further longitudinal rim, thereby forming a longitudinal seam of the container precursor.

Preferably, the container precursor has a sleeve-like shape. Here, the container precursor preferably constitutes a sleeve, which is open at a first end and a further end, which is opposite to the first end.

In a preferred embodiment of the container precursor, the blank comprises at least two folds, preferably at least 3 folds, more preferably at least 4 folds. This preferred embodiment is a 75^{th} embodiment of the invention, that preferably depends on the 74^{th} embodiment of the invention.

The preceding folds are preferably longitudinal folds.

A 76^{th} embodiment of the invention is a closed container comprising a sheet-like region of the sheet-like composite according to any of the 1^{st} to 50^{th} and 70^{th} embodiments of the invention, or the blank according to the 71^{st} or 73^{rd} embodiment of the invention.

In a preferred embodiment of the closed container, the sheet-like region or the blank comprises a first longitudinal rim and a further longitudinal rim, wherein the first longitudinal rim is joined to the further longitudinal rim, thereby forming a longitudinal seam of the closed container. This preferred embodiment is a 77^{th} embodiment of the invention, that preferably depends on the 76^{th} embodiment of the invention.

In a preferred embodiment of the closed container, the sheet-like region or the blank comprises at least two folds, preferably at least 3 folds, more preferably at least 4 folds. This preferred embodiment is a 78^{th} embodiment of the invention, that preferably depends on the 76^{th} or 77^{th} embodiment of the invention.

The preceding folds are preferably longitudinal folds.

In a preferred embodiment of the closed container, the closed container contains a food or drink product. This preferred embodiment is a 79^{th} embodiment of the invention, that preferably depends on any of the 76^{th} to 78^{th} embodiments of the invention.

An 80^{th} embodiment of the invention is a method comprising, as method steps:
A) providing the blank according to the 71^{st} or 73^{rd} embodiment of the invention, wherein the blank comprises a first longitudinal rim and a further longitudinal rim;
B) folding the blank; and
C) contacting and joining the first longitudinal rim to the further longitudinal rim, thereby obtaining a longitudinal seam.

The method is preferably for producing a container precursor from the blank. Preferably, in the method step C) a container precursor is obtained from the blank.

An 81^{st} embodiment of the invention is a container precursor which is obtainable by the method according to the 80^{th} embodiment.

An 82^{nd} embodiment of the invention is a method for producing a closed container, the method comprising as method steps:
A] providing
   i] the container precursor according to the 74^{th} or 75^{th} embodiment of the invention, or
   ii] the roll according to the 71^{st} or 72^{nd} embodiment of the invention;
B] contacting the inner surface with a food or drink product;
C] forming a closed container
   i] from the container precursor by folding the blank and joining surface areas of the blank to one another, or
   ii] from an area of the sheet-like composite by folding the area and joining surface areas of the area to one another.

Preferably, the method comprises a combination of the method steps A] i] and C] i]. In this case the method is preferably for producing the closed container by the so-called sleeve method. Alternatively preferred, the method comprises a combination of the method steps A] ii] and C] ii]. In this case the method is preferably for producing the closed container by the so-called tube method, also known as roll-fed method or form-fill-seal-method.

In a preferred embodiment of the method, prior to the method step B] at least in a section of the sheet-like composite a first longitudinal rim of the sheet-like composite is contacted and joined to a further longitudinal rim of the sheet-like composite, thereby obtaining a longitudinal seam and forming at least the section of the sheet-like composite into a tubular shape. This preferred embodiment is an 83^{rd} embodiment of the invention, that preferably depends on the 82^{nd} embodiment of the invention. This applies preferably if the method corpuses the alternative A] ii].

In a preferred embodiment of the method, in the method step B] the tubular shape is filled with the food or drink product. This preferred embodiment is an 84^{th} embodiment of the invention, that preferably depends on the 83^{rd} embodiment of the invention.

In a preferred embodiment of the method, in the method step C] a section of the tubular shape is closed at a first end and a further end, which is opposite the first end, thereby obtaining a closed section, the closed section is separated off and formed into the closed container. This preferred embodiment is an 85^{th} embodiment of the invention, that preferably depends on the 83^{rd} or 84^{th} embodiment of the invention.

In a preferred embodiment of the method, prior to the method step B] a base or top region of the closed container is formed and closed by folding the blank and joining surface areas of the blank to one another. This preferred embodiment is an 86^{th} embodiment of the invention, that preferably depends on the 82^{nd} embodiment of the invention. This applies preferably if the method corpuses the alternative A] i].

In a preferred embodiment of the method, in the method step B] the container precursor is filled with the food or drink product. This preferred embodiment is an 87^{th} embodiment of the invention, that preferably depends on the 82^{nd} or 86^{th} embodiment of the invention. This applies preferably if the method corpuses the alternative A] i].

In a preferred embodiment of the method, in the method step C] a top or base region of the closed container is formed and closed by folding the blank and joining surface areas of the blank to one another. This preferred embodiment is an 88^{th} embodiment of the invention, that preferably depends on the 82^{nd}, 86^{th} or 87^{th} embodiment of the invention. This applies preferably if the method corpuses the alternative A] i].

An 89^{th} embodiment of the invention is a closed container which is obtainable by the method according to any of the 82^{nd} to 88^{th} embodiments of the invention.

A 90^{th} embodiment of the invention is a use of the sheet-like composite according to any of the 1^{st} to 50^{th} and 70^{th} embodiments of the invention for production of a food or drink product container, preferably by the so-called sleeve method or by the so-called tube method, also known as roll-fed method or form-fill-seal-method.

A 91^{st} embodiment of the invention is a use of the container precursor according to the 74^{th}, 75^{th} and 81^{st} embodiments of the invention for production of a food or drink product container, preferably by feeding the container precursor to a filling machine.

A 92^{nd} embodiment of the invention is a use of the roll according to the 71^{st} or 72^{nd} embodiment of the invention for production of a food or drink product container, preferably by feeding the sheetlike composite directly from the roll to a filling machine.

A 93^{rd} embodiment of the invention is a use of a barrier film for production of a packaging laminate, wherein the barrier film
- comprises a plurality of fibres,
- has a first tensile strength in a first barrier layer direction, and
- a further tensile strength in a further barrier layer direction, which is perpendicular to the first barrier layer direction;
wherein a ratio of the first tensile strength to the further tensile strength is in a range from more than 0.5 to less than 1.7, preferably from 0.6 to 1.6, more preferably from 0.7 to 1.5, more preferably from 0.8 to 1.4, more preferably from 0.9 to less than 1.4, more preferably from 0.9 to 1.3, more preferably from more than 0.9 to 1.2, even more preferably from 1 to 1.2, most preferably from 1 to 1.1. Alternatively preferred, the ratio of the first composite tensile strength to the further composite tensile strength is in a range from 0.6 to 1.7, more preferably from 0.7 to 1.7, more preferably from 0.8 to 1.6, more preferably from 0.9 to 1.5, more preferably from 1.0 to less than 1.4, even more preferably from 1.1 to 1.3.

The barrier film preferably has one or more features of the barrier layer of the sheet-like composite of the invention according to any of its embodiments. Preferably, the barrier film is the barrier layer of the sheet-like composite of the invention according to any of its embodiments. The packaging laminate preferably has one or more features of the sheet-like composite of the invention according to any of its embodiments. Preferably, the packaging laminate is the sheet-like composite of the invention according to any of its embodiments.

In a preferred embodiment of the use, the packaging laminate comprises a layer sequence which comprises the following layers, superimposed to one another, in the following order from an outer surface of the packaging laminate to an inner surface of the packaging laminate:
a. a carrier layer,
b. the barrier film as a barrier layer, and
c. a first inner polymer layer.

This preferred embodiment is a 94^{th} embodiment of the invention, that preferably depends on the 93^{rd} embodiment of the invention.

The carrier layer preferably has one or more features of the carrier layer of the sheet-like composite of the invention according to any of its embodiments. Preferably, the carrier layer is the carrier layer of the sheet-like composite of the invention according to any of its embodiments.

The first inner polymer layer preferably has one or more features of the first inner polymer layer of the sheet-like composite of the invention according to any of its embodiments. Preferably, the first inner polymer layer is the first inner polymer layer of the sheet-like composite of the invention according to any of its embodiments.

Features described as preferred in one category of the invention, for example according to the sheet-like composite, are analogously preferred in an embodiment of the other categories according to the invention, such as the methods and the uses.

### Sheet-like composite

All laminates, in particular sheet-like or planar laminates, which are conceivable within the context of the invention and which appear to the person skilled in the art to be suitable in the context of the invention for the production of dimensionally stable foodstuff containers are to be considered as sheet-like composites. Sheet-like composites for the manufacture of food or drink product containers are also referred to as laminates. Such sheet-like composites have a sequence of layers superimposing each other in a sheet-like or planar manner. The sheet-like composites are often composed of a polymer layer, a carrier layer, often made of cardboard or paper, which gives the container its dimensional stability, an optional polymer layer and/or an optional adhesion promoter layer, a barrier layer and at least one further polymer layer. Basically, *"sheet-like composite"* is used herein as a generic term that includes both semi-endless roll material and a blank of such roll material. The blank is preferably designed to produce a single container. The sheet-like composite can be a flat or three-dimensional object. The latter is, in particular the case, if the sheet-like composite has been folded or rolled up.

### Partial sheet-like composite

The partial sheet-like composite is an auxiliary mental construct used herein to further characterise the sheet-like composite. The partial sheet-like composite consists all layers of the sheet-like composite, which are arranged on a side of the carrier layer facing the inner surface. Thus, the partial sheet-like composite comprises, in particular, the barrier layer and the first inner polymer layer. If the respective layer is present in the sheet-like composite, the partial sheet-like composite also comprises the first adhesion promoter layer, the further adhesion promoter layer and the further inner polymer layer. The layer of the sheet-like composite which forms the inner surface is preferably the first inner polymer layer. In order to verify the features of the partial sheet-like composite, all the layers of the sheet-like composite, which are on a side of the carrier layer which faces the outer surface, and the carrier layer itself may be separated from the partial sheet-like composite as described below in the test methods section. The composite plane of the partial sheet-like composite is preferably a plane in which the partial sheet-like composite extends in a sheet-like manner. As the sheet-like composite and also the partial sheet-like composite may be bent or curved, the composite plane can also be bent or curved. In any case, the first and further composite directions lie in the composite plane. Preferably, the first composite direction is a machine direction (MD) of producing the barrier layer, wherein the further composite direction is a cross direction (CD) of producing the barrier layer. Alternatively preferred, the further composite direction is a machine direction (MD) of producing the barrier layer, wherein the first composite direction is a cross direction (CD) of producing the barrier layer.

### Layers of the sheet-like composite

The layers of the layer sequence have been joined to one another in a planar manner, preferably over their entire surfaces. Two layers are joined together when their adhesion to each other exceeds Van der Waals forces of attraction. Preferably, layers joined to one another are one selected from the group consisting of joined with one another by coating, laminated together, sealed together, glued together, and pressed together, or a combination of at least two thereof. Layers joined to one another by coating are preferably joined to one another by melt coating. A preferred melt coating is a melt extrusion coating.

Unless stated otherwise, in a layer sequence, the layers may follow one another indirectly, i.e. with one or at least two intermediate layers, or directly, i.e. with no intermediate layer. This is the case especially in the form of words in which one layer is superimposed to another layer. A form of words in which a layer sequence comprises enumerated layers means that at least the layers specified are present in the sequence specified. This form of words does not necessarily mean that these layers follow on directly from one another. A form of words in which two layers adjoin one another means that these two layers follow on from one another directly and hence with no intermediate layer. However, this form of words does not specify whether or not the two layers have been joined to one another. Instead, these two layers may be in contact with one another. Preferably, however, these two layers are joined to one another, preferably in a planar manner.

### Carrier layer

The carrier layer used may be any material which appears suitable to a person skilled in the art for this purpose and which has sufficient strength and stiffness to impart stability to the container, made from the sheet-like composite, to such an extent that the container in the filled state essentially retains its shape (dimensional stability). This is, in particular, a necessary feature of the carrier layer since the invention relates to the technical field of dimensionally stable food or drink product containers. Dimensionally stable containers of this kind should in principle be distinguished from pouches and bags, which are usually produced from thinner films.

For the carrier layer, as well as to a number of plastics, preference is given to plant-based fibrous materials, especially pulps, preferably limed, bleached and/or unbleached pulps, with paper, paperboard and cardboard being especially preferred. Thus, a preferred carrier layer comprises a plurality of fibres. The basis weight of the carrier layer is preferably in a range from 120 to 450 g/m², more preferably in a range from 130 to 400 g/m² and most preferably in a range from 150 to 380 g/m².

A preferred cardboard generally has a single or multi-layer structure and may be coated on one or both sides with one or more cover layers. Furthermore, a preferred cardboard has a residual moisture content of less than 20 % by weight, preferably from 2 to 15 % by weight and particularly preferably from 4 to 10 % by weight based on the total weight of the cardboard. A particularly preferred cardboard has a multi-layer structure. Furthermore, the cardboard preferably has on the surface facing the outer surface at least one, but particularly preferably at least two, cover layers known to the skilled person as a *"coating"* or *"paper coating".* Furthermore, a preferred cardboard has a Scott-Bond value (according to Tappi 569) in a range from 100 to 360 J/m², preferably from 120 to 350 J/m² and particularly preferably from 135 to 310 J/m². The above ranges make it possible to provide a composite from which a container can be folded with high tightness, easily and to low tolerances.

Preferably, the carrier layer comprises at least 2, more preferably at least 3, particularly preferably exactly 3 or 5, sub-layers, each of a fibre-containing material, wherein the sub-layers are superimposed to one another and joined to one another. The fibre-containing materials of the individual sub-layers may differ at least partially from one another or may all be the same. A further particularly preferred carrier layer comprises, as superimposed and interconnected sub-layers of a sub-layer sequence, preferably in a direction from a side of the carrier layer, which faces the outer surface, to a side of the carrier layer, which faces the inner surface, a first sub-layer comprising a fibrous material, a second sub-layer comprising a fibrous material and a third sub-layer comprising a fibrous material. The fibrous materials of the first to third sub-layers may be the same or different from each other. In any case, the fibrous material comprises a plurality of fibres. Furthermore, in addition to the aforementioned layer sequence, a preferred carrier layer includes at least one cover layer as a further sub-layer. Preferably, the layer sequence of first to third sub-layers is superimposed on a side of the carrier layer, which faces the outer surface, with at least one cover layer as a further sub-layer. Alternatively or additionally preferred, the layer sequence of first to third sub-layers is superimposed on a side of the carrier layer, which faces the inner surface, with at least one cover layer as a further sub-layer. Preferably, an average fibre length of the plurality of fibres of the fibrous material of the first sub-layer is less than an average fibre length of the plurality of fibres of the fibrous material of the third sub-layer, preferably by 0.1 to 3 mm, more preferably by 0.5 to 2.5 mm, most preferably by 1 to 2.0 mm.

The terms "*paperboard*", *"cardboard"* and *"paper"* are used herein according to the definitions in the standard DIN 6735:2010. In addition, cardboard is preferably a material that has a combination of properties of paper and paperboard. Further, cardboard preferably has a basis weight in a range of 150 to 600 g/m².

### Cover layer

A preferred cover layer is a *"paper coating".* In papermaking, a *"paper coating",* also referred to as *"coating",* is a cover layer comprising inorganic solid particles, preferably pigments and additives. The *"paper coating"* is preferably applied as a liquid phase, preferably as a suspension or dispersion, to a surface of a paper- or cardboard-comprising layer. A preferred dispersion is an aqueous dispersion. A preferred suspension is an aqueous suspension. Another preferred liquid phase includes inorganic solid particles, preferably pigments; a binder; and additives. A preferred pigment is selected from the group consisting of calcium carbonate, kaolin, talc, silicate, a plastic pigment and titanium dioxide. A preferred kaolin is a calcined kaolin. A preferred calcium carbonate is one selected from the group consisting of marble, chalk and a precipitated calcium carbonate (PCC) or a combination of at least two thereof. A preferred silicate is a layered silicate. A preferred plastic pigment is spherical, preferably hollow spherical. A preferred binder is one selected from the group consisting of styrene-butadiene, acrylate, acrylonitrile, a starch and a polyvinyl alcohol or a combination of at least two thereof, acrylate being preferred. A preferred starch is one selected from the group consisting of cationically modified, anionically modified, and fragmented or a combination of at least two thereof. A preferred additive is one selected from the group consisting of a rheology modifier, a shade dye, an optical brightener, a carrier, a flocculant, a deaerator, and a surface energy modifier, or a combination of at least two thereof. A preferred deaerator is a coating colour deaerator, preferably silicone-based or fatty acid-based or both. A preferred surface energy modifier is a surfactant.

### Barrier layer

The barrier layer preferably has sufficient barrier action against one selected from the group, consisting of oxygen, liquid water, water vapour, and aroma, or against a combination of at least two of these. Accordingly, the barrier layer is preferably one selected from the group, consisting of an oxygen barrier layer, a water vapour barrier layer, and an aroma barrier layer, or a combination of at least two of these. An oxygen barrier layer has a barrier effect against transmission of oxygen. A water vapour barrier layer has a barrier effect against transmission of water vapour. An aroma barrier layer has a barrier effect against transmission of aroma.

The barrier layer comprises a plurality of fibres. Preferably, the fibres of the plurality of fibres are present across the full thickness of the barrier layer. Additionally or alternatively preferred, the barrier layer does not include a metallisation. More preferably, the barrier layer does not include a barrier coating. Even more preferably, the barrier layer does not include a coating, which does not include fibres of the plurality of fibres. Further preferably, the barrier layer does not include any coating. Preferably, the barrier layer consists of a single material. Here, a preferred material is an MFC-material.

The barrier layer preferably is a prefabricated barrier film which preferably has been laminated to the carrier layer, preferably using the first adhesion promoter or an intermediate polymer layer or both as laminating agents. The barrier layer preferably adjoins the further adhesion promoter layer, the further inner polymer layer or the first inner polymer layer.

A barrier layer plane is a plane in which the barrier layer extends in a sheet-like manner. As the sheet-like composite with the barrier layer may be bent or curved, the barrier layer plane can also be bent or curved. In any case, the first and further barrier layer directions lie in the barrier layer plane. Preferably, the first barrier layer direction is a machine direction (MD) of producing the barrier layer, wherein the further barrier layer direction is a cross direction (CD) of producing the barrier layer. Alternatively preferred, the further barrier layer direction is a machine direction (MD) of producing the barrier layer, wherein the first barrier layer direction is a cross direction (CD) of producing the barrier layer. Preferably, the first tensile strength of the barrier layer is a maximum of the tensile strength of the barrier layer, or the further tensile strength of the barrier layer is a minimum of the tensile strength of the barrier layer, or both, in each case based on the tensile direction. Alternatively preferred, the first tensile strength of the barrier layer is a minimum of the tensile strength of the barrier layer, or the further tensile strength of the barrier layer is a maximum of the tensile strength of the barrier layer, or both, in each case based on the tensile direction. Preferably, a machine direction of producing the barrier layer is a direction of predominant orientation of the fibres of the plurality of fibres of the barrier layer. The cross direction of producing the barrier layer is in the same plane of the barrier layer as MD, but perpendicular to MD

The fibres of the plurality of fibres of the barrier layer may be any fibres that seem suitable to the person skilled in the art in the context of the invention, especially all fibres known in paper, cardboard or paperboard production. Fibres are linear elongate structures that have a ratio of length to diameter or thickness of at least 3:1. Preferred fibres are plant fibres. Plant fibres is a collective term for fibres of plant origin. In plants, plant fibres occur as a vascular bundle in the stalk or stem, in the bark (for instance in the form of bast) and as seed shoots. A subdivision is made in DIN 60001-1: 2001-05 Textile fibres - Part 1: "Natural fibres and letter codes", Beuth Verlag, Berlin 2001, p. 2 into seed fibres, bast fibres and hard fibres, or in DIN EN ISO 6938: 2015-01 "Textiles - Natural fibres - Generic names and definitions", Beuth Verlag, Berlin 2015, p. 4. into seed fibres, bast fibres, leaf fibres and fruit fibres, which thus implements a division of the hard fibres. Fibres that are preferred in the context of the invention include a chemical pulp or a mechanical pulp or both; the fibres preferably consist thereof.

A particularly preferred plurality of fibres of the barrier layer is microfibrillated cellulose (MFC). Preferably, the barrier layer comprises paper or MFC or both. A preferred barrier layer is a layer of a barrier paper or an MFC-film, wherein an MFC-film is particularly preferred.

### Microfibrillated cellulose (MFC)

For the plurality of fibres of the barrier layer each kind of MFC, which the skilled person deems suitable in the context of the invention, comes into consideration. There are different acronyms for MFC such as cellulose microfibrils, fibrillated cellulose, nanofibrillated cellulose, fibril aggregates, nanoscale cellulose fibrils, cellulose nanofibres, cellulose nanofibrils, cellulose microfibres, cellulose fibrils, microfibrillar cellulose, microfibril aggregates and cellulose microfibril aggregates. A fibril is a microscopically small fibre.

MFC means a material, which comprises one selected from the group, consisting of partly or totally fibrillated cellulose fibres, partly or totally fibrillated lignocellulose fibres, and partly or totally fibrillated hemicellulose fibres, or a combination of at least two thereof, wherein the fibres are aggregated to constitute a three-dimensional network or a two-dimensional network. The non-aggregated fibrils of the network or structure are referred to as elementary fibrils. Aggregates of elementary fibrils are referred to as microfibrils. The elementary fibril has an average diameter in the nm-regime, preferably of less than 100 nm, and an average length in the µm-regime, preferably of at least 1 µm. In the case of MFC, herein the average diameter of fibres and the average length of fibres refer to the elementary fibres of the MFC.

The barrier layer preferably comprises the MFC in a proportion in a range from 50 to 100 wt.- %, preferably from 50 to less than 100 wt.-%, more preferably from 60 to 95 wt.-%, more preferably from 70 to 90 wt.-%, based in each case on the weight of the total solids content of the barrier layer. In addition to the MFC, the barrier layer may comprise one or more additives. Preferred additives are selected from the group, consisting of a filler (such as clay), a binder (such as PVOH or PVAC), a dispersing agent, a softener, and a plasticiser, or a combination of at least two thereof. A plasticiser is an additive, which increases plasticity of the barrier layer. A preferred plasticiser is one selected from the group, consisting of a sugar alcohol (such as sorbitol), a polyol (such as glycerol), a polyether (such as polyethylene glycol (PEG)), and a cellulose derivative (such as carboxy methyl cellulose (CMC)), or a combination of at least two thereof. Preferably, the barrier layer comprises a plasticiser in a proportion of less than 10 wt.-%, preferably less than 5 wt.-%, more preferably less than 0.1 wt.-%, based in each case on the weight of the total solids content of the barrier layer. Further, the barrier layer may comprise a plurality of non-MFC fibres, such as cellulose or lignocellulose fine particles and oversized fibres, in particular fibres which have not been efficiently fibrillated.

MFC is obtained through a fibrillation process of one selected from the group, consisting of cellulose fibres, lignocellulose fibres, and hemicellulose fibres, or of a combination of at least two thereof. Preferably, mechanical shearing is used for the fibrillation process. The fibres are separated into a three-dimensional network of microfibrils or a two-dimensional network of microfibrils, in each case with a large surface area. The fibrils obtained by the fibrillation process are much smaller in diameter than the original fibres. The fibrillation process comprises fibrillating the fibres longitudinally and thus obtaining the three-dimensional network or two-dimensional network, which has a much higher surface area than regular cellulose fibres or powdered cellulose.

The fibres used for the fibrillation process are preferably wood cellulose fibres. Preferred wood cellulose fibres are hardwood fibres or softwood fibres or both. MFC can also be obtained from microbial sources, agricultural fibres such as wheat straw pulp, bamboo, bagasse, or other non-wood fibre sources. It is preferably obtained from pulp including pulp from virgin fibre, preferably one selected from the group, consisting of mechanical pulp, chemical pulp, and thermomechanical pulp, or a combination of at least two thereof. MFC can also be obtained from broke or recycled paper.

### Chemical pulp

Chemical pulp typically refers to the fibrous mass formed in the chemical digestion of plant fibres that typically consists predominantly of cellulose.

### Mechanical pulp

Mechanical pulp refers to the substance that is typically used for the production of particular types of paper. It is obtained from wood and, unlike chemical pulp, typically contains relatively high proportions of lignin. Mechanical pulp can be detected by staining the lignin present red with phloroglucinol solution in hydrochloric acid and hence distinguished from chemical pulp. Wurster's blue and red (named for Casimir Wurster) and aniline sulfate have frequently also been used for the purpose. The high lignin content of mechanical pulp can lead to yellowing in the case of paper (wood-pulp paper) produced from mechanical pulp. The wood from which the mechanical pulp is obtained typically consists mainly of lignocellulose. Lignocellulose consists of cellulose molecules aggregated to form fibres. A matrix of lignin permeates the cellulose, giving rise to a pressure- and tear-resistant composite. In the production of mechanical pulp, the wood is shredded by various methods. Mechanical pulp is produced by mechanical and/or thermal and/or chemical methods of wood digestion. According to these modes of production, a distinction is made between mechanical pulp MP, which is produced by merely mechanical methods of wood digestion; and thermomechanical pulp (TMP), which is produced by wood digestion comprising mechanical and thermal and optionally also chemical steps. The aforementioned methods of wood digestion comprising mechanical and thermal and optionally also chemical steps are also referred to as refiner methods. A preferred thermomechanical pulp is a chemithermomechanical pulp (CTMP). The mechanical methods of wood digestion especially include grinding methods such as wood grinding and pressure grinding. A preferred mechanical pulp MP is a ground wood or a pressure-ground wood or both. Alternatively or additionally preferably, the mechanical pulp has been produced from a soft wood or hard wood or both. Soft wood, as opposed to hard wood, refers to lighter wood, for example having an oven-dry density below 0.55 g/cm³ (for example willow, poplar, linden and nearly all coniferous woods). The term soft wood should not be used equivalently to the English term "*softwood*", which refers primarily to the origin of the wood and merely indirectly to the wood's characteristics because there are also relatively hard coniferous woods.

### Polymer layers

In the following, the term *"polymer layer"* refers in particular to the first inner polymer layer, the further inner polymer layer, the outer polymer layer and the intermediate polymer layer. The *"inner"* in "*first inner polymer layer*" and "*further inner polymer layer"* refers to the respective layer being superimposed to the barrier layer on a side of the barrier layer which faces the inner surface, i.e. to the inner side of the barrier layer. The *"outer"* in *"outer polymer layer"* refers to the outer polymer layer being superimposed to the carrier layer on a side of the carrier layer which faces the outer surface, i.e. to the outer side of the carrier layer. The *"intermediate"* in *"intermediate polymer layer"* refers to the intermediate polymer layer being arranged between the carrier and the barrier layer.

The polymer layers are each based on a polymer or a polymer blend, i.e. the polymer layers comprise a majority of the polymer or polymer blend. A preferred polymer is a thermoplastic polymer, more preferably a polyolefin. The polymer layers are preferably incorporated or applied into the sheet-like composite in an extrusion process, preferably by melt extrusion coating. In addition to the polymer or polymer blend, each polymer layer may comprise further constituents. The further constituents of the polymer layers are preferably constituents which do not adversely affect the behaviour of the polymer melt when applied as a layer. The further constituents may be, for example, inorganic compounds, such as metal salts, or further plastics, such as further thermoplastics.

In general, suitable polymers for the polymer layers are in particular those which are easy to process due to good extrusion behaviour. Among these, polymers obtained by chain polymerisation are suitable, in particular polyolefins, whereby cyclic olefin co-polymers (COC), polycyclic olefin co-polymers (POC), in particular polyethylene and polypropylene, are particularly preferred and polyethylene is especially preferred. Among the polyethylenes, HDPE (high density polyethylene), MDPE (medium density polyethylene), LDPE (low density polyethylene), LLDPE (linear low density polyethylene) and VLDPE (very low density polyethylene) as well as blends of at least two of them are preferred. Suitable polymers, preferably, have a melt flow rate (MFR) in a range from 1 to 25 g/10 min, preferably in a range from 2 to 20 g/10 min and particularly preferably in a range from 2,5 to 15 g/10 min. Additionally or alternatively preferred, suitable polymer layers have a density in a range of 0.890 g/cm³ to 0.980 g/cm³, preferably in a range of 0.895 g/cm³ to 0.975 g/cm³, and more preferably in a range of 0.900 g/cm³ to 0.970 g/cm³. The polymer layers preferably have at least one melting temperature in a range from 80 to 155 °C, preferably in a range from 90 to 145 °C, and more preferably in a range from 95 to 135 °C.

### Polyolefin

In the context of the invention, a preferred polyolefin is a polyethylene (PE) or a polypropylene (PP) or both. A preferred polyethylene is one selected from the group consisting of an LDPE, an LLDPE, and an HDPE, or a combination of at least two thereof. A further preferred polyolefin is an mPolyolefin (polyolefin produced by means of a metallocene catalyst). Suitable polyethylenes have a melt flow rate (MFI - melt flow index = MFR - melt flow rate) in a range from 1 to 25 g/10 min, preferably in a range from 2 to 20 g/10 min and particularly preferably in a range from 2.5 to 15 g/10 min, and/or a density in a range of 0.910 g/cm³ to 0.935 g/cm3, preferably in a range of 0.912 g/cm³ to 0.932 g/cm³, and more preferably in a range of 0.915 g/cm³ to 0.930 g/cm³.

### mPolymer

An mPolymer is a polymer produced by means of a metallocene catalyst. A metallocene is an organometallic compound in which a central metal atom is located between two organic ligands, such as cyclopentadienyl ligands. A preferred mPolymer is an mPolyolefin, preferably an mPolyethylene (mPE) or an mPolypropylene or both. A preferred mPolyethylene is one selected from the group consisting of an mLDPE, an mLLDPE, and an mHDPE, or a combination of at least two thereof. A preferred mPolyolefin is characterised by at least a first melting temperature and a second melting temperature. Preferably, the mPolyolefin is characterised by a third melting temperature in addition to the first and second melting temperatures. A preferred first melting temperature is in a range from 84 to 108 °C, preferably from 89 to 103 °C, more preferably from 94 to 98 °C. A preferred second melting temperature is in a range from 100 to 124 °C, preferably from 105 to 119 °C, more preferably from 110 to 114 °C.

### Intermediate polymer layer

Preferably, the layer sequence of the sheet-like composite of the invention comprises an intermediate polymer layer, which is arranged between the carrier layer and the barrier layer. The intermediate polymer layer preferably comprises at least one, preferably thermoplastic, polymer in a proportion of at least 70 wt.-%, preferably at least 80 wt.-%, more preferably at least 90 wt.- %, more preferably at least 95 wt.-%, more preferably at least 97 wt.-%, more preferably at least 98 wt.-%, even more preferably at least 99 wt.-%, most preferably 100 wt.-%, based in each case on the total weight of the intermediate polymer layer. The at least one polymer in the intermediate polymer layer preferably is at least one polyolefin. The at least one polyolefin in the intermediate polymer layer preferably is polyethylene or polypropylene or a mixture of both. Preferably, the polyethylene in the intermediate polymer layer is LDPE. In a preferred embodiment of the method for producing a sheet-like, the method step A. further comprises providing an intermediate polymer layer composition, wherein in the method step B. the barrier layer is laminated to the carrier layer with the intermediate polymer layer composition as laminating agent, thereby obtaining an intermediate polymer layer from the intermediate polymer layer composition. The method step A. of the method for producing a sheet-like composite preferably further comprises providing an intermediate polymer layer composition, wherein laminating the barrier layer to the carrier layer comprises melt extruding the intermediate polymer layer composition.

### Colour application

Preferably, the colour application is a printed layer or a decoration or both. Additionally or alternatively preferred, the colour application is disposed between the outer polymer layer and the carrier layer, or superimposed to the outer polymer layer on a side of the outer polymer layer which faces away from the carrier layer. In the latter case, the colour application is preferably not superimposed by any layer of the sheet-like composite on the side of the colour application which faces away from the carrier layer. Preferably, the colour application adjoins the outer polymer layer or the carrier layer or both. Preferably, the colour application includes at least one colourant, more preferably at least 2, more preferably at least 3, more preferably at least 4, even more preferably at least 5 and most preferably at least 6 colourants.

### Colourant

Useful colourants include both solid and liquid colourants that are known to the person skilled in the art and are suitable for the present invention. According to DIN 55943:2001-10, colourant is the collective term for all colouring substances, especially for dyes and pigments. A preferred colourant is a pigment. A preferred pigment is an organic pigment. Pigments that are notable in connection with the invention are especially the pigments mentioned in DIN 55943:2001-10 and those mentioned in "Industrial Organic Pigments, Third Edition" (Willy Herbst, Klaus Hunger Copyright© 2004 WILEY-VCH Verlag GmbH & Co. KGaA, Weinheim ISBN: 3-527-30576-9). A pigment is a colourant that is preferably insoluble in the application medium. A dye is a colourant that is preferably soluble in the application medium.

### Adhesion promoter polymer/adhesion promoter layer

In the following, the term " *adhesion promoter layer"* refers in particular to the first adhesion promoter layer and the further adhesion promoter layer, but also to each other adhesion promoter layer of the sheet-like composite according to the invention. An adhesion promoter layer is a layer of the sheet-like composite that includes at least one adhesion promoter polymer in a suf- ficient amount such that the adhesion promoter layer improves adhesion between layers adjacent to the adhesion promoter layer. Accordingly, the adhesion promoter layers are preferably polymer layers. An adhesion promoter layer may be located between each two layers of the sheet-like composite which do not adjoin one another. Suitable adhesion promoter polymers in an adhesion promoter layer are all polymers which, by functionalisation by means of suitable functional groups, are suitable for producing a firm bond by forming ionic bonds or covalent bonds to a surface of a respective adjacent layer. A preferred adhesion promoter polymer is a functionalised polyolefin. A preferred functionalised polyolefin is an acrylic acid copolymer obtained by co-polymerisation of ethylene with acrylic acid such as acrylic acid, methacrylic acid, crotonic acid, acrylates, acrylate derivatives or double bond-bearing carboxylic acid anhydrides, for example maleic anhydride, or at least two thereof. Among these, polyethylene-maleic anhydride graft polymers (EMAH), ethylene-acrylic acid copolymers (EAA) or ethylene-methacrylic acid copolymers (EMAA) are preferred, which are marketed for example under the trade names Bynel^{®} and Nucrel 0609HSA^{®} by DuPont or Escor 6000 ExCo^{®} by ExxonMobile Chemicals. A particularly preferred adhesion promoter polymer is an ethylene-alkyl acrylate copolymer. The alkyl group is preferably a methyl, ethyl, propyl, i-propyl, butyl-, i-butyl or a pentyl group. Further preferably, the adhesion promoter layer may comprise blends of two or more different ethylene alkyl acrylate copolymers. Equally preferably, the ethylene alkyl acrylate copolymer may have two or more different alkyl groups in the acrylate function, e.g., an ethylene alkyl acrylate copolymer in which both methyl acrylate units and ethyl acrylate units are present in the same copolymer.

According to the invention, it is preferred that the adhesion between the carrier layer, a polymer layer or the barrier layer to the respective next layer is at least 0.5 N/15mm, preferably at least 0.7 N/15mm and particularly preferably at least 0.8 N/15mm. In one embodiment according to the invention, it is preferred that the adhesion between a polymer layer and a carrier layer is at least 0.3 N/15mm, preferably at least 0.5 N/15mm and particularly preferably at least 0.7 N/15mm. Furthermore, it is preferred that the adhesion between the barrier layer and a polymer layer is at least 0.8 N/15mm, preferably at least 1.0 N/15mm and particularly preferably at least 1.4 N/15mm. In the case that the barrier layer indirectly follows a polymer layer via an adhesion promoter layer, it is preferred that the adhesion between the barrier layer and the adhesion promoter layer is at least 1.8 N/15mm, preferably at least 2.2 N/15mm and particularly preferably at least 2.8 N/15mm. In an embodiment, the adhesion between the individual layers is so strong that the adhesion test results in a tearing of the carrier layer, in particular, in the case of cardboard as the carrier layer in a so-called cardboard fibre tear.

### Outer surface

The outer surface of the sheet-like composite is a surface of the sheet-like composite which is intended to be in contact with the environment of the container in a container to be produced from the sheet-like composite. This does not contradict with the outer surface in various regions of the composite being folded onto itself and joined to itself, for example sealed to itself, in individual regions of the container.

### Inner surface

The inner surface of the sheet-like composite is a surface of the sheet-like composite which is intended to be in contact with the contents of the container, preferably a food or drink product, in a container to be produced from the sheet-like composite.

### Groove lines

In the context of the invention, a groove or groove line, is a linear material modification intended to facilitate folding of the sheet-like composite or blank thereof along the groove line. In particular, the groove line is intended to allow a fold to be produced as precisely as possible along the groove line. Accordingly, a closed container can be formed from the sheet-like composite or a blank thereof, in each case having a corresponding arrangements of groove lines, by folding along the groove lines. The sheet-like composite may include exactly one or multiple such arrangements of groove lines, each of which is arranged and configured to form a respective container. Preferably, all the arrangements of groove lines of the sheet-like composite are identical.

Along the groove line, the sheet-like composite preferably has a depression, preferably in the form of a material displacement, on one side, preferably the side of the outer surface. On the opposite side, preferably the side of the inner surface, the sheet-like composite preferably has a bulge along the groove line.

In addition to the aforementioned folding, the production of the container includes the joining of surface areas of the sheet-like composite that have been contacted by way of the folding. Grooving tools are used to introduce the groove lines into the sheet-like composite, a process known as grooving. A grooving tool in the context of the invention may be any tool suitable for grooving a sheet-like composite or a carrier layer. For grooving, the grooving tool preferably includes a linear elevation which has a shape of the linear depression. By contacting the sheet-like composite or carrier layer with the linear elevation, the linear depression can be introduced into the sheet-like composite or carrier layer. Thus, the grooving tool can also be referred to as a pressing tool. As a counterpart to the aforementioned positive tool, the grooving tool may also include a negative tool. The negative tool includes a linear recess, which may also be referred to as groove-shaped. The linear recess preferably has, in a direction of its linear extension, the shape of the linear elevation of the positive tool and is further configured to at least partially receive material of the sheet-like composite or carrier layer displaced by the positive tool during grooving.

### Extruding / extruder

In the context of the invention, every extruder known to the skilled person and which appears to him to be suitable for purposes of the invention comes into consideration. An extruder is a device for shaping a mass, preferably a polymer mass, by pressing through a shaping orifice. A preferred extruder is a screw extruder. A melt extrusion coating is an application of a mass by pressing a melt, forming the mass, through the shaping orifice of an extruder onto a substrate so that a planar layer of the mass superimposing the substrate is obtained. In the case of a polymer composition as a mass, the mass is preferably melted for extrusion coating. During extrusion, the polymers are typically heated to temperatures of 210 to 350 °C, measured at the molten polymer film below the exit at the extruder die. Extrusion can be carried out by means of commercially available extrusion tools known to the person skilled in the art, such as extruders, extruder screws, feedblocks, etc. At the end of the extruder there is preferably an orifice through which the polymer melt is pressed. The orifice can have any shape that allows the polymer melt to be extruded. For example, the orifice may be angular, oval or round. Preferably, the orifice has the shape of a slot of a funnel. After the melt layer has been applied to the substrate by means of the method described above, the melt layer is allowed to cool for the purpose of heat-setting, this cooling preferably being effected by quenching via contact with a surface maintained at a temperature in a range from 5 to 50 °C, more preferably in a range from 10 to 30 °C. Subsequently, at least the flanks are separated from the surface. The separation can be carried out in any way that is familiar to the skilled person and appears suitable in order to separate the flanks quickly, as accurately as possible and cleanly. Preferably, the separation is carried out by means of a knife, laser beam or water jet, or a combination of two or more of these, whereby the use of knives, in particular a pot knife, is particularly preferred.

### Laminating

Prefabricated films or layers, such as preferably are the carrier layer and the barrier layer, may be joined to one another by laminating. In this case, the prefabricated layers or films are joined with the aid of one or more suitable laminating agents. A preferred laminating agent comprises, preferably consists of, a polymer composition from which a polymer layer, preferably the first adhesion promoter layer or an intermediate polymer layer, is obtainable. In a preferred embodiment of the invention the layer sequence comprises an intermediate polymer layer between the carrier layer and the barrier layer. Preferably, the method step A. of the method for producing a sheet-like composite further comprises providing an intermediate polymer layer composition, wherein in the method step B. the barrier layer is laminated to the carrier layer with the intermediate polymer layer composition as laminating agent, thereby obtaining an intermediate polymer layer from the intermediate polymer layer composition.

### Joining

Any joining method which appears to the skilled person to be suitable for use according to the invention and by which a sufficiently strong connection can be obtained may be considered in the context of the invention. A preferred joining method is a material-to-material joining method. A material-to-material joint is understood herein to be a joint between joining partners which is produced by attractive forces between materials or within a material. A distinction must be made between this and, in particular, form-fitting and friction-fitting joints that are created by geometric shapes or frictional forces. A preferred material-to-material joining method may be one selected from the group consisting of a sealing, a welding, a gluing, and a pressing, or a combination of at least two of them. In the cases of sealing and welding, the joint is created by means of a liquid and its solidification. In the case of gluing, chemical bonds are formed between the surfaces of the two objects to be joined, which create the joint. It is often advantageous in the case of sealing, welding or gluing to press the surfaces to be joined together. A preferred pressing of two layers is a pressing of a respective first surface of a first of the two layers onto a second surface of the second of the two layers facing the first surface over at least 20 %, preferably at least 30 %, more preferably at least 40 %, more preferably at least 50 %, more preferably at least 60 %, more preferably at least 70 %, still more preferably at least 80 %, still more preferably at least 90 %, most preferably at least 95 %, of the first surface. A particularly preferred joining is a sealing or welding. A preferred sealing or welding includes as steps a contacting, a heating and a pressing, wherein the steps are preferably performed in this sequence. Another sequence is also conceivable, in particular the sequence of heating, contacting and pressing.

### Food or drink product

In the context of the invention, the sheet-like composite and the container precursor are preferably designed for production of a food or drink product container. In addition, the closed container according to the invention is preferably a food or drink product container. Food and drink products include all kinds of food and drink known to those skilled in the art for human consumption and also animal feeds. Preferred food and drink products are liquid above 5 °C, for example milk products, soups, sauces, non-carbonated drinks.

### Container precursor

A container precursor is a preliminary stage of the container that is created during the production of a, preferably closed, container. In this case, the container precursor comprises the sheet-like composite, preferably as a blank. Preferably, the container precursor consists of the blank. A preferred container precursor is cut to size and designed to produce a single, preferably closed, container. A preferred container precursor which is cut to size and designed to produce a single container is also referred to as a sleeve. Here the sleeve includes the sheet-like composite folded, preferably along at least 2 longitudinal folds, more preferably along 4 longitudinal folds. These longitudinal folds are preferably, but not necessarily, arranged and configured to form longitudinal edges of a, preferably closed, container formed at least in part from the container precursor. Further, the sleeve includes a longitudinal seam along which a first longitudinal rim of the blank is joined to a further longitudinal rim. Here, the sleeve is open in a top region and a base region. A preferred container precursor is formed in one piece.

### Container

The container according to the invention may have a multitude of different forms, but preference is given to an essentially cuboidal structure. In addition, the full area of the container may be formed from the sheet-like composite, or it may have a two-part or multipart construction. In the case of a multipart construction, it is conceivable that, as well as the sheet-like composite, other materials are also used, for example plastic, which can be used especially in the top or base regions of the container. In this context, however, it is preferable that the container is formed from the sheet-like composite to an extent of at least 50 %, especially preferably to an extent of at least 70 % and further preferably to an extent of at least 90 % of the area. In a preferred configuration, the container according to the invention has at least one edge, preferably a number of edges of the container is in a range from 4 to 22, especially preferable from 7 to 12. Edges in the context of the present invention are understood to mean regions which arise in the folding of the sheet-like composite. Examples of edges include the longitudinal contact regions between two wall areas of the container, also referred to as longitudinal edges herein. In the container, the container walls are preferably the areas of the container framed by the edges. Preferably, the interior of a container according to the invention contains a food or drink product. Preferably, the closed container does not comprise any lid or base, or either, that has not been formed in one piece with the sheet-like composite. A preferred closed container contains a food or drink product. A preferred closed container is a food or drink product container or a dimensionally stable container or both.

### Edges

Herein, edges or folds are defined as the linear regions of the sheet-like composite which are formed by a folding of the sheet-like composite and at which in each case two, preferably flat, regions of the sheet-like composite adjoin each other. These edges are to be distinguished from cut edges. Herein, cut edges are the linear regions of the sheet-like composite which delimit the dimensions of the sheet-like composite laterally. The term *"cut edge"* herein does not necessarily mean that the sheet-like composite has actually been cut. The region of the sheet-like composite which runs along a cut edge and which forms the vicinity of the cut edge is referred to herein as rim.

### Longitudinal and transversal

In regard of folds, rims and seams of a sheet-like composite in the form of a roll, i.e. in a rolled-up state, or in the form of a web the term *"longitudinal"* means the direction of the length of the sheetlike-composite. In regard of folds and rims of a blank or a sheet-like region of a sheet-like composite the term *"longitudinal"* means the direction of the height of the container to be made from the blank or from the sheet-like region. In each case, the first longitudinal rim is opposite the further longitudinal rim in a transversal direction of the sheet-like composite, blank or sheet-like region. In regard of folds, seams and edges of a container precursor the term *"longitudinal"* means the direction of the height of the container to be made from the container precursor. In regard of seams and edges of a container the term *"longitudinal"* means the direction of the height of the container. In regard of the groove lines of an arrangement of groove lines the term *"longitudinal"* means the direction of the height of the container, which is obtainable by folding along the groove lines of the arrangement of groove lines and joining surface areas to one another. In each case, *"transversal"* means in the same plane as *"longitudinal",* but perpendicular to *"longitudinal".*

### Method steps

The method steps of the methods according to the invention are carried out in the order of their symbols. In principle, method steps with immediately successive symbols can be carried out one after the other, at the same time or overlapping in time. If multiple operations are performed in the same method step, these operations may be conducted in any order, at the same time or overlapping in time as long as not given otherwise.

### TEST METHODS

The following test methods were used within the context of the invention. Unless stated otherwise, the measurements were conducted at an ambient temperature of 23 °C, an ambient air pressure of 100 kPa (0.986 atm) and a relative air humidity of 50 %.

### Preparation of partial sheet-like composite

Test specimens are cut from the sheet-like composite using a lever safety cutter. For this purpose, unfolded and ungrooved regions of the sheet-like composite are used. The width of the strips is 15 mm and the strip length is 230 mm. The respective test strip is manually divided within the carrier layer by carefully pulling apart and the thus separated partial sheet-like composite is carefully freed from remaining cardboard fibres with a water-damp brush. For testing, the thus prepare test specimen may be further cut to the desired size.

### Separation of individual layers

If individual polymer layers of a laminate are to be examined separately herein, the polymer layer to be examined is first separated from the laminate as described below. Three specimens of the sheet-like composite are cut to size. For this purpose, unless stated otherwise, unfolded and ungrooved regions of the sheet-like composite are used. Unless stated otherwise, the specimens have dimensions of 4 cm × 4 cm. Should other dimensions of the layer to be examined be necessary for the examination to be conducted, sufficiently large specimens are cut out of the laminate. The layer to be examined is separated out of each of the preceding specimen. In particular, in order to release a joint between layers, where the joint is on the side of the barrier layer which faces the outer surface of the sheet-like composite, such as the joint between the outer polymer layer and the carrier layer, the specimens are introduced into an acetic acid bath (30% acetic acid solution: 30% by weight of CH₃COOH, remainder to 100 % by weight H₂O) heated to 60 °C for 30 minutes. This detaches the layers from one another. If required, the layers may also be cautiously manually pulled apart. Should the desired layer not be sufficiently readily detachable, as an alternative, new specimens with the above dimensions are used and these are treated in an ethanol bath (99 % ethanol) as described above. If residues of the carrier layer (especially in the case of a cardboard layer as carrier layer) are present on the layer to be examined, these are cautiously removed with a brush. In any case, one sample of size sufficient for the examination to be conducted (unless stated otherwise, with an area of 4 cm²) is cut out of each of the three films of the layer to be examined that have been prepared as described above. These samples are then stored at 23 °C for 4 hours and hence dried. Subsequently, the three samples can be examined. Unless stated otherwise, the result of the examination is the arithmetic mean of the results for the three samples.

### Tensile strength of partial sheet-like composites

The material to be tested is conditioned for 24 h in a standard climate (23 °C, 50 % relative humidity). The test is also carried out in a standard climate. The tensile strength is determined by a tensile test with a universal tensile testing machine Tira test 28025 (Tira GmbH; Eisfelder Straße 23/25; 96528 Schalkau, Germany; load cell: 1 kN) according to DIN EN ISO 1924-2:2009-05. For this purpose, 10 samples with the dimensions 15 mm × 180 mm are prepared from the partial sheet-like composite to be tested. In each case, 5 of the sample pieces are measured in the first composite direction and the other 5 sample pieces in the further composite direction. For each measurement, the specimen is clamped in the tensile testing machine in the layer direction to be tested (clamping length: 40 mm). The test speed is V1=100 mm/min. For each specimen, a force-elongation diagram is obtained. If the diagram shows a local maximum of the force over elongation of the specimen before the specimen is elongated further and finally breaks, the value of the tensile strength of this specimen is the force at the local maximum divided by the width of the specimen (15 mm). If the force-elongation diagram of a specimen does not show a local force maximum before the specimen tears apart, i.e. if the force increases monotonically until the specimen breaks, the value of the tensile strength of this specimen is the maximum force at the local maximum divided by the width of the specimen (15 mm). Thus, in each case the tensile strength is the maximum tensile force per unit width that the partial sheet-like composite withstands before breaking in accordance with section 3.1 of DIN EN ISO 1924-2:2009-05. Accordingly, the tensile strength of a partial sheet-like composite is reported in kN/m. For each test direction, the arithmetic mean is calculated from the values obtained for the 5 samples. The tensile strengths in the first layer direction and the further layer direction are these arithmetic mean values.

### Tensile strength of barrier layers

If present as part of a laminate, the barrier layer to be tested is first separated from the other layers of the laminate. The separated barrier layer is conditioned for 24 h in a standard climate (23 °C, 50 % relative humidity). The test is also carried out in a standard climate. The tensile strength is determined by a tensile test with a universal tensile testing machine Tira test 28025 (Tira GmbH; Eisfelder Straße 23/25; 96528 Schalkau, Germany; load cell: 1 kN) according to DIN EN ISO 1924-2:2009-05. For this purpose, 10 samples with the dimensions 15 mm × 180 mm are prepared from the barrier layer to be tested. In each case, 5 of the sample pieces are measured in the first barrier layer direction and the other 5 sample pieces in the further barrier layer direction. For each measurement, the specimen is clamped in the tensile testing machine in the layer direction to be tested (clamping length: 40 mm). The test speed is V1=100 mm/min. For each direction, the arithmetic mean is calculated from the values obtained for the 5 samples. The tensile strengths in the first barrier layer direction and the further barrier layer direction are these arithmetic mean values. In deviation from section 3.1 of DIN EN ISO 1924-2:2009-05, the tensile strength of barrier layers is reported as the maximum tensile force per unit surface area of the cross-section of the specimen (length × width) that the respective barrier layer withstands before breaking. Accordingly, the tensile strength of a barrier layer is reported in MPa.

### Young's modulus of barrier layers

The separated barrier layer is conditioned for 24 h in a standard climate (23 °C, 50 % relative humidity). The test is also carried out in the standard climate. Young's modulus is determined using a universal tensile testing machine Tira test 28025 (Tira GmbH; Eisfelder Straße 23/25; 96528 Schalkau, Germany; load cell: 1 kN) according to DIN EN ISO 1924-2:2009-05. For this purpose, 10 samples with the dimensions 15 mm × 180 mm are prepared from the barrier layer to be tested. In each case, 5 of the sample pieces are measured in the first barrier layer direction and the other 5 sample pieces in the further barrier layer direction. For each measurement, the specimen is clamped in the tensile testing machine in the layer direction to be tested (clamping length: 40 mm). The test speed is V1=100 mm/min. For each direction, the arithmetic mean is calculated from the values obtained for the 5 samples. Young's moduli in the first and the further barrier layer directions are these arithmetic mean values. The parameter Young's modulus is what is defined in section 3.8 of DIN EN ISO 1924-2:2009-05 as modulus of elasticity.

### Tensile stiffness of partial sheet-like composites

The partial sheet-like composite is conditioned for 24 h in a standard climate (23 °C, 50 % relative humidity). The test is also carried out in the standard climate. For this test, Young's modulus is determined using a universal tensile testing machine Tira test 28025 (Tira GmbH; Eisfelder Straße 23/25; 96528 Schalkau, Germany; load cell: 1 kN) according to DIN EN ISO 1924-2:2009-05. For this purpose, 10 samples with the dimensions 15 mm × 180 mm are prepared from the partial sheet-like composite to be tested. The thickness of each of the samples is determined before the tensile test as described in the test method, which follows below. In each case, 5 of the sample pieces are measured in the first composite direction and the other 5 sample pieces in the further composite direction. For each measurement, the specimen is clamped in the tensile testing machine in the direction to be tested (clamping length: 40 mm). The test speed is V1=100 mm/min. Each Young's modulus measured this way is multiplied with the thickness of the respective sample. The result are 5 values of tensile stiffness per direction. For each direction, the arithmetic mean is calculated from the 5 values of tensile stiffness. The tensile stiffness in the first and the further composite directions are these arithmetic mean values. The parameter Young's modulus is what is defined in section 3.8 of DIN EN ISO 1924-2:2009-05 as modulus of elasticity.

### Layer thickness and thickness of partial sheet-like composite

The layer thickness and the thickness of a partial sheet-like composite are determined using a sample of the sheet-like composite with the layer to be tested or a sample of the partial sheet-like composite, in each case having a surface area of 0.5 cm², and a scanning electron microscope (SEM). A cross section through the layer structure of the sheet-like composite or of the partial sheet-like composite is prepared manually with a blade (Leica Microtome Blades 819). The cross section is sputtered with gold (Cressington 108auto from Cressington Scientific Instruments Ltd., Watford (UK)) and then analysed by SEM (Quanta 450, FEI Deutschland GmbH, Frankfurt) under high vacuum (pressure < 7.0·10⁻⁵ Pa). The layer thicknesses of the individual layers or the thickness of the partial sheet-like composite is ascertained with the *"xT Microscope Control"* software, version 6.2.11.3381, FEI Company, Frankfurt, Germany, respectively. The layer thickness is reported as an average layer thickness. Therefore, three samples are taken and measured as described above and the arithmetic mean is formed from the three results.

### Oxygen transmission rate (OTR) of sheet-like material

Oxygen transmission rate of a sheet-like material, such as a barrier layer, a partial sheet-like and a sheet-like composite, is determined according to the standard ASTM D3985-05 (2010). Unless stated otherwise, samples are taken from ungrooved and unfolded regions of the material to be tested. In addition, the sample is tested with the side facing the outer surface in the laminate facing the test gas. The area of the sample is 50 cm². The measurements are conducted at an ambient temperature of 23 °C, an ambient air pressure of 100 kPa (0.986 atm) and a relative air humidity of 50 %. The test instrument is an Ox-Tran 2/22 from Mocon, Neuwied, Germany. The measurement is conducted without compressed air compensation. For the measurements, samples at ambient temperature are used. Further, 0 % oxygen at the side of the sample which in the laminate faces the inner surface and 100 % oxygen at the opposite side, i.e. the side of the sample that in the laminate faces the outer surface, are used for the measurement. Further settings and factors that affect the measurement - especially the rest of those listed under point 16 of the standard ASTM D3985-05 (2010) - are defined by the instrument used and the proper use and maintenance thereof according to the manufacturer's handbook.

### Oxygen transmission rate (OTR) of containers

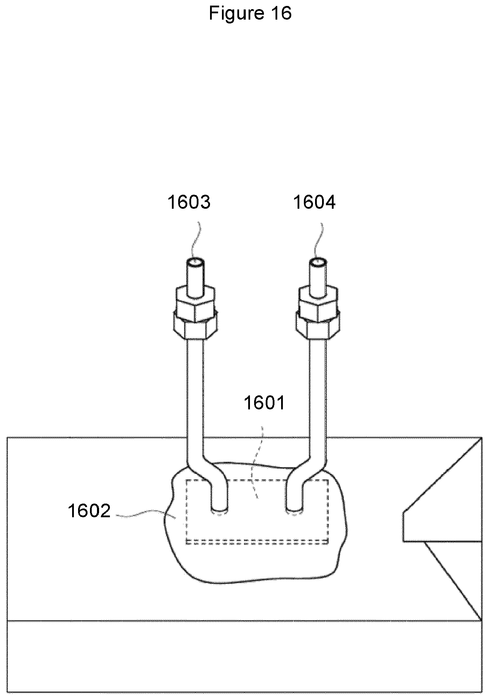

In order to determine the oxygen transmission rate of a container, a hole is cut into a side panel of the filled closed container. The dimensions of the hole are 10 mm × 40 mm. The container is emptied through the hole. Afterwards, a metal plate having tubes as gas inlet and gas outlet is put on the hole of the container such that the hole is fully covered by the plate. The gas inlet and the gas outlet extend through the hole into the interior of the container. In order to obtain a gas tight connection between plate and container, an epoxy resin, Devcon 5 Minute^{®} Epoxy by company ITW Engineered Polymers, is used as sealing compound. The resulting setup is shown in Figure 16. Further, the container is connected to the measurement device Ox-tran Model 2/21, Mocon, Neuwied, Germany via the tubes. The device is operated according to the software which comes along with the device. Measurement of the OTR is conducted with the Ox-tran Mode 12/21 device (Mocon, Neuwied, Germany) and the according software. Therein, the measurement is in accordance with the standards ASTM D3985 (2010), DIN 53380-3 (1998-07), ASTM F-2622, ISO 14663-2 Annex C or ISO 15105-2 (2003-02). Measurement is conducted at 23 °C and 50 % relative air humidity for a duration of 24 h. Five containers which are identical in construction and which have been produced identically are prepared and studied as described above and the arithmetic mean is calculated and presented in volume of O2 in ml / (package · year).

### Water vapour transmission rate (WVTR) of sheet-like material

Water vapour transmission rate of a sheet-like material, such as a barrier layer, a partial sheet-like and a sheet-like composite, is determined according to standard ASTM F1249-13. Unless stated otherwise, samples are taken from ungrooved and unfolded regions of the material to be tested. In addition, the sample is tested with the side facing the inner surface in the laminate (the side facing the contents of the container) facing the elevated humidity. The measurement area of the sample is 50 cm². The measurements are conducted at an ambient temperature of 23 °C, an ambient air pressure of 100 kPa (0.986 atm) and a relative air humidity of 50 % on the side of the sample which in the laminate faces the outer surface and of 0 % on the opposite side of the sample, i.e. the side of the sample which in the laminate faces the inner surface. The test instrument is a Permatran - W Model 3/33 from Mocon, Neuwied, Germany. For the measurements, samples at ambient temperature are used. Further settings and factors that affect the measurement - especially the rest of those listed under point 12 of the standard ASTM F1249-13 - are defined by the instrument used and the proper use and maintenance thereof according to the manufacturer's handbook.

### Water vapour transmission rate (WVTR) of containers

In order to determine the oxygen transmission rate of a container, a hole is cut into a side panel of the filled closed container. The dimensions of the hole are 10 mm × 40 mm. The container is emptied through the hole and the container is left for drying. After the container interior has dried, a metal plate having tubes as gas inlet and gas outlet is put on the hole of the container such that the hole is fully covered by the plate. The gas inlet and the gas outlet extend through the hole into the interior of the container. In order to obtain a gas tight connection between plate and container, an epoxy resin, Devcon 5 Minute^{®} Epoxy by company ITW Engineered Polymers, is used as sealing compound. The resulting setup is shown in Figure 16. Further, the container is connected to the measurement device Permatran - W Model3/33 from Mocon, Neuwied, Germany via the tubes. The device is operated according to the software which comes along with the device. The WVTR is determined according to the ASTM F1249-13 standard. The measuring surface of the sample corresponds to the surface of the sample which in the laminate faces the inner surface. The measurements are performed at an ambient temperature of 23 °C, an ambient air pressure of 100 kPa (0.986 atm) and an ambient (outside the container) relative humidity of 50 %. At the beginning of the measurement, the relative humidity in the container is 0 %. The tester is a Permatran - W Model3/33 from Mocon, Neuwied, Germany. For the measurements samples with the ambient temperature are used. Further settings and influencing factors for the measurement - in particular the other factors listed under point 12 of ASTM F1249-13 - are predetermined by the measuring instrument used and its proper use and maintenance according the manufacturer's manual. The obtained value of the WVTR is converted to cm² of the container wall (inner side) and year.

### Liquid tightness

Crystal oil 60 from Shell Chemicals with methylene blue is used as the test agent for testing the liquid tightness of a container. In order to determine if a certain container type (shape, structure and production method) is liquid-tight, 250 identical containers of this container type are tested. Each of the 250 containers is cut open along its circumference so as to obtain a first open cup-like container part containing the sealed container base and a second open cup-like container part containing the sealed container top. The first container part with the container base and the second container part with the container top are each first emptied and then filled with an amount of the test agent sufficient to completely cover the bottom of the respective cup-like container part. Then the container parts are stored for 24 hours. After the storage time, each container part is examined on its outer side with the naked eye to see whether the test agent has produced a blue discolouration there in the event of a leak. If in this test not more than 1 of the 500 container parts of the 250 identical containers shows such a discolouration, these containers are considered to be liquid-tight.

### MFR value

The MFR value (mass-based melt flow rate in g/10 min) is measured in accordance with the standard DIN EN ISO 1133-1:2012-03 (unless otherwise stated at 190°C with 2.16 kg). Therein, method A as defined in the standard is used applying the standardised extrusion tool. The sample is conditioned in accordance with DIN EN ISO 1872-1. Sample mass and time interval for cutting off the extrudate are selected in accordance with table 4 on page 16 of DIN EN ISO 1133-1:2012-03. In accordance with the comment under the index c below the table 4, the mass is to be determined at an accuracy of 0.1 g.

### Density

Density is measured in accordance with the standard DIN EN ISO 1183-1:2012-04. Therein, method B (section 5.2 of the standard), applying a liquid pycnometer, is used. The sample to be studied is conditioned in accordance with DIN EN ISO 1872-1:199-10. Distilled water is used as the immersion liquid. The test temperature is 23 °C. No buoyancy correction is applied.

### Scott Bond value

The Scott Bond value is determined in accordance with Tappi 569.

### Melting temperature

Sample preparation for differential scanning calorimetry (DSC):
In case of a layer of a laminate, the material to be studied is separated from the other layers of the laminate as described above. A sample of at least 1.0 mg is weighed with a Kern 770 precision balance from Kern & Sohn GmbH, Balingen, Germany. For this purpose, the empty DSC pan is tared one the balance. Then the sample is weighed. Subsequently, the pan is closed with a lid on a press. The lid should have a small hole, so that the pan will not be deformed during DSC measurement. The sample and the crucible must not be deformed during the DSC measurement. Care must be taken not to touch the sample or the crucible by bare hand during sample preparation.

Differential scanning calorimetry (DSC):
The melting temperature is determined in accordance with standard DIN EN ISO 11357-3:2011(E). As described therein by reference, the differential scanning calorimetry is conducted according to standard DIN EN ISO 11357-1, here version 11357-1:2010-03. The following details apply in addition to what is given in the standard or deviating from the standard. The calorimeter is a DSC 8000 from PerkinElmer Inc. In the DSC-method, the heat flow is measured as a function of the temperature. The graph of the measurement therefore shows the heat flow (dQ/dt) on the ordinate axis as a function of the temperature (T) on the abscissa axis. The endothermic direction is always upwards, as in note 2 to section 3.1 of DIN EN ISO 11357-1:2010-03. According to section 4.2 of standard DIN EN ISO 11357-1:2010-03, a heat flow differential calorimetry is carried out. In this case, the reference crucible is always empty and, according to section 3.10 of DIN EN ISO 11357-1:2010-03, the reference position is always used for the temperature. Nevertheless, a reference crucible must always be used. The flushing gas used (sections 5.5 and 9.1.2 of DIN EN ISO 11357-1:2010-03 is nitrogen. Prior to each measurement, the DSC instrument is calibrated according to sections 8.2 to 8.4 of DIN EN ISO 11357-1:2010-03 using the calibrating substances (section 3.2 and 5.4 of DIN EN ISO 11357-1:2010-03) indium and zinc (as per annex C of DIN EN ISO 11357-1:2010-03). As recommended in 8.4.2 of DIN EN ISO 11357-1:2010-03, the heat calibration is carried out using indium as calibrating substance. The crucible is fed to the calorimeter via the auto-sampler. Details about the sample are entered via the editor (name, weight, method of measurement, position on the auto sampler, memory location). The measurements are carried out in dynamic mode (3.9.5 of DIN EN ISO 11357-1:2010-03). In this case the sample is pre-treated by first heating from 35 °C to 160 °C at 20 °C/min and maintaining the temperature for 1 minute. Thereafter, the sample is cooled to 35 °C at 2 °C/min. After that, the measurement process is carried out with a heating rate of 20°C/min up to 160°C.

### Evaluation:

For the evaluation of the measurement, only the second heating curve described above is used. The curve can be selected in the menu under *"curves"* and there *"heat flow".* The selected curve is coloured in blue, the rest of the data is red and can be removed via *"remove curve".* Then, the melting temperature can be determined from the data via selecting *"peak area"* in the menu *"calc".* The peak is marked and then evaluated automatically. The sample has exactly as many melting temperatures as its second heating curve has endothermic peaks. If a sample has more than one peak, i.e., more than one melting temperature, the one of these at the lowest temperature is meant in case of any reference herein to a single melting temperature.

### Residual moisture content of cardboard and moisture content of barrier layer

The residual moisture content of the cardboard and also the moisture content of the barrier layer are measured according to the ISO 287:2009 standard.

### Adhesion

The adhesion of two adjacent layers is determined by fixing them in a 90° peel test instrument, for example the Instron *"German rotating wheel fixture",* on a rotatable roller which rotates at 40 mm/min during the measurement. The samples had been cut beforehand into strips 15 mm wide. On one side of the sample, the laminas are detached from one another and the detached end is clamped in a tensile device directed vertically upward. A measuring instrument to determine the tensile force is attached to the tensile device. As the roller rotates, the force needed to separate the laminas from one another is measured. This force corresponds to the adhesion of the layers to one another and is reported in N/15 mm. The separation of the individual layers can be effected mechanically, for example, or by means of a controlled pre-treatment, for example by soaking the sample in 30 % acetic acid at 60 °C for 3 min.

### Detection of colourants

Detection of organic colourants can be conducted in accordance with the methods described in *"*Industrial Organic Pigments, Third Edition" (Willy Herbst, Klaus Hunger Copyright® 2004 WILEY-VCH Verlag GmbH & Co. KGaA, Weinheim ISBN: 3-527-30576-9).

### EXAMPLES

The invention is described in more detail hereinafter by examples and figures, where the examples and figures do not imply any restriction of the invention. Also, unless otherwise indicated, the figures are not to scale.

### Laminate construction

For the Example (according to the invention) and the Comparative Example (not according to the invention), laminates with the layer constructions and layer sequences specified in Tables 1 and 2 below are prepared. The laminates of the Example and the Comparative Example differ essentially by the choice of the barrier layer. Other differences pertain only to the layers which are directly adjacent to the barrier layers. In both cases, these layers were chosen to achieve optimum adhesion of the carrier layer to the barrier layer. In this way, an effect of difference in adhesion on the tightness of containers should be avoided.

**Table 1: Layer structure used for the laminate of the Example**

| **Layer** | **Material** | **Basis Weight [g/m²]** |
|---|---|---|
| outer polymer layer | LDPE 23L430 from Ineos GmbH, Cologne, Germany | 15 |
| carrier layer | Stora Enso 240 Natura T Duplex, double-coated, Scott-Bond 200 J/m² residual, residual moisture content 7.5 % | 240 |
| intermediate polymer layer | LDPE 23L430 from Ineos GmbH, Cologne, Germany | 20 |
| barrier layer | MFC-film from VTT Technical Research Centre of Finland Ltd., 02044 Espoo, Finland | 29.36 |
| further adhesion promoter layer | Escor^{™} 5100 from Exxon Mobil Corporation | 4 |
| further inner polymer layer | LDPE 19N430 from Ineos GmbH, Cologne, Germany | 21 |
| first inner polymer layer | blend of | 10 |
| | (1) 30 wt.-% of mLLDPE Eltex^{®} PF1315AZ from Ineos GmbH, Cologne, Germany, and | |
| | (2) 70 wt.-% of LDPE 19N430 from Ineos GmbH, Cologne, Germany | |

**Table 2: Layer structure used for the laminate of the Comparative Example**

| **Layer** | **Material** | **Basis Weight [g/m²]** |
|---|---|---|
| outer polymer layer | LDPE 23L430 from Ineos GmbH, Cologne, Germany | 15 |
| carrier layer | Stora Enso 240 Natura T Duplex, double-coated, Scott-Bond 200 J/m² residual, residual moisture content 7.5 % | 240 |
| intermediate polymer layer | LDPE 23L430 from Ineos GmbH, Cologne, Germany | 18 |
| first adhesion promoter layer | Ethylene-Methacrylic-Acid-Copolymer (EMAA) M21N430 from Ineos GmbH, Cologne, Germany | 4 |
| barrier layer | MFC-film Sylvicta, 62 g/m², from Arjowiggins, Issy-les-Moulineaux, France | 62 |
| further adhesion promoter layer | Adhesive Resin BYNEL^{™} 21E4817 from DOW | 4 |
| further inner polymer layer | LDPE 19N430 from Ineos GmbH, Cologne, Germany | 21 |
| first inner polymer layer | blend of | 10 |
| | (1) 30 wt.-% of mLLDPE Eltex^{®} PF1315AZ from Ineos GmbH, Cologne, Germany, and | |
| | (2) 70 wt.-% of LDPE 19N430 from Ineos GmbH, Cologne, Germany | |

### Laminate production

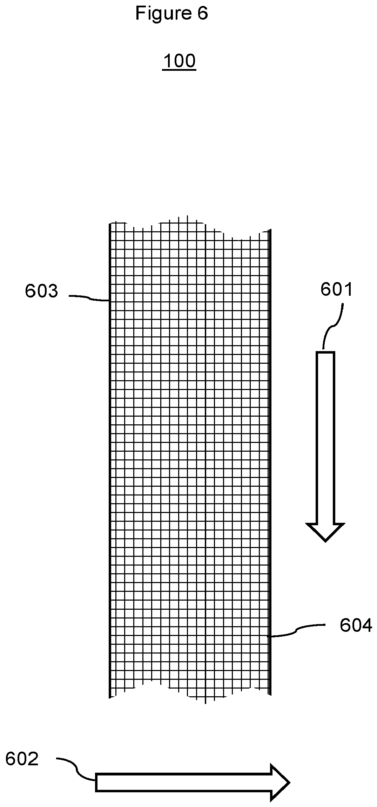

The laminates of the Example and the Comparative Example are produced with an extrusion coating system from Davis Standard. For application of the individual layers by melt extrusion coating, the polymers are melted in an extruder. The resultant melt is transferred via a feed block into a nozzle and extrusion-coated onto the substate. The extrusion temperature here is in the range from about 280 to 330 °C. The carrier layer and the barrier layer are each provided in form of a web. The outer polymer layer is applied directly to the carrier layer by melt extrusion coating. The barrier layer is laminated with the intermediate polymer layer and, where applicable, the first adhesion promoter layer as laminating agents to the carrier layer that has been coated with the outer polymer layer beforehand. Subsequently, the further adhesion promoter layer, the further inner polymer layer and the first inner polymer layer are co-extrusion coated onto the barrier layer. By the preceding method, the laminates of the Example and the Comparative Example are obtained in the form of webs as shown in Figure 6. In each case, the machine direction (MD) of the respective barrier layer is in the direction of the length of the sheet-like composite web.

### Container production

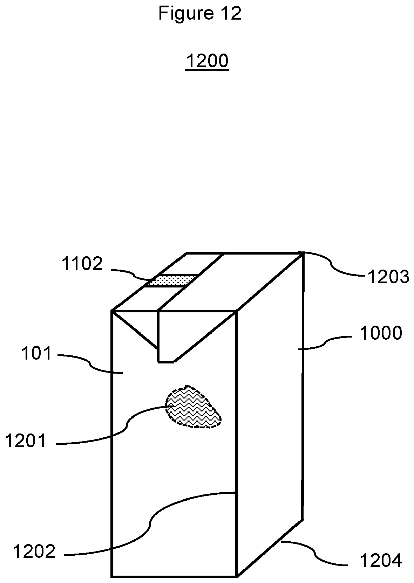

Closed containers of the type shown in Figure 12 are produced from the laminates prepared as described above. For each of the Example and the Comparative Example the sleeve method as well as the tube method are used to produce closed containers.

Sleeve method:
A plurality of the arrangements of groove lines shown in Figure 5 is introduced into the web by a grooving method. Here, the arrangements are oriented as shown in Figure 9. The grooved web is divided into multiple blanks for individual containers by die cutting. The blanks are of the form shown in the Figure 10. By folding along the 4 longitudinal groove lines of each and every blank and hot air sealing of overlapping fold faces (first and further longitudinal rims), container precursors in the form of sleeves as shown in Figure 11 are obtained. These sleeves are used to produce closed containers of the cuboid shape shown in Figure 12 in a CFA 712 standard filling machine from SIG Combibloc, Linnich, Germany. This is accomplished by the method of Figure 14, wherein water is used for the food or drink product.

### Tube method:

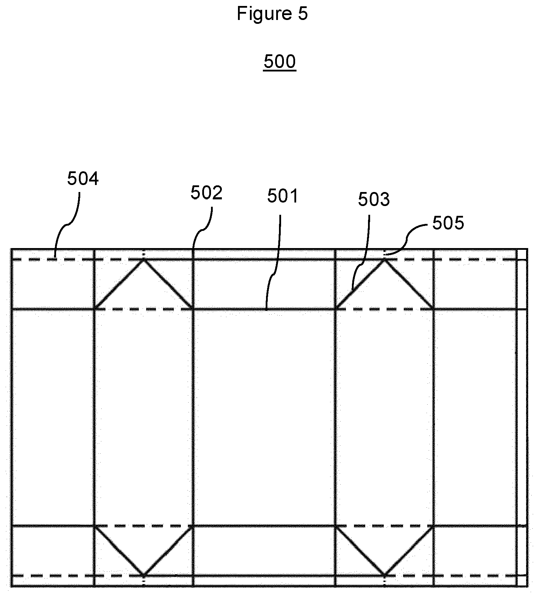

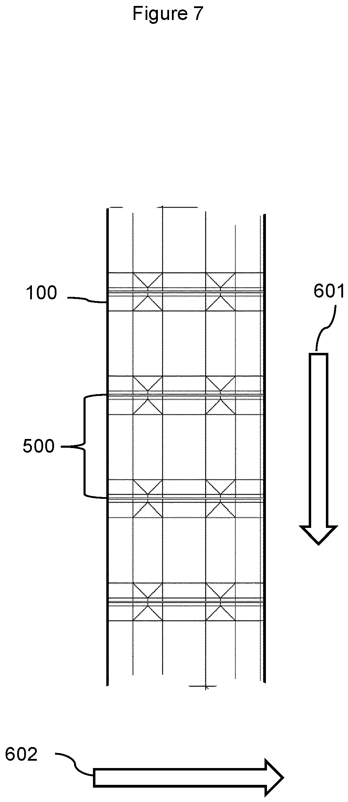

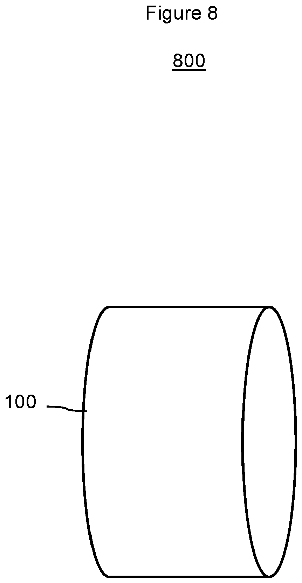

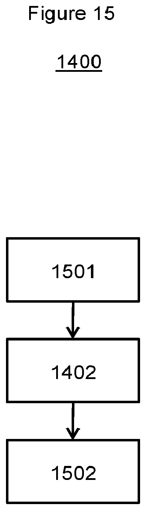

A plurality of the arrangements of groove lines shown in Figure 5 is introduced into the web by a grooving method. Here, the arrangements are oriented as shown in Figure 7. The grooved web is rolled-up to form a roll as shown in Figure 8. This roll is loaded into a Tetra Pak^{®} A3/Speed filling machine, which produces closed containers of the cuboid shape shown in Figure 12 from the sheet-like composite. This is accomplished by the method of Figure 15, wherein water is used for the food or drink product.

### Evaluation

The tensile strengths of the barrier layers used in the Example and the Comparative Example are determined in MD (machine direction of the respective barrier layer) and CD (cross direction of the respective barrier layer) prior to processing the barrier layers to produce the laminates. Further, partial sheet-like composites are prepared from the laminates of the Example and the Comparative Example as described above in the test methods section. The tensile strengths of the partial sheet-like composites are also determined in MD and CD of the respective barrier layer. In each case, the ratio of the tensile strengths in MD to CD is given in the below Table 3.

**Table 3: Ratios of tensile strengths in MD and CD**

| | **Ratio tensile strength MD/CD** | |
|---|---|---|
| | **Partial sheet-like composite** | **Barrier layer** |
| **Example** | 1.27 | 1.21 |
| **Comparative Example** | 1.94 | 1.93 |

The structures of the laminates of the Example and the Comparative Example differ essentially by their barrier layers. While these barrier layers are generally similar in that they are made from MFC and are thus both particularly eco-friendly, they differ in the degree of isotropy of tensile strength. In result, the ratio of the tensile strength in MD of the barrier layer to the tensile strength in CD is closer to 1 for the partial laminate of the Example than for the partial laminate of the Comparative Example. This has significant impact on the flexibility of the laminates in terms of suitability for use in the sleeve and tube methods.

In order to show this, the closed containers, prepared from the laminates of the Example and the Comparative Example by the sleeve method and the tube method, are studied for their tightness with regard to liquids, oxygen and water vapour. This is done by the test methods *"Oxygen transmission rate (OTR) of containers", "Liquid tightness"* and *"Water vapour transmission rate (WVTR) of containers"* as described above in the test methods section. It is found that the containers of the Comparative Example are less tight in terms of these tests if produced by the sleeve method than containers of the Comparative Example produced by the tube method. This is different for the containers of the Example. Here, containers prepared by the sleeve method show a similar tightness with regard to oxygen, liquids and water vapour as containers prepared by the tube method. It follows that the laminate of the Example is suitable to produce containers with high shelf-life by the sleeve method as well as by the tube method. In that regard, the laminates of the Comparative Example are more suitable for the tube method than for the sleeve method. Thus, the laminate of the Example is more flexible in terms of suitability for production of eco-friendly food or drink product containers with high shelf-life by the sleeve and tube methods.

The figures respectively show, in schematic form and not to scale, unless stated otherwise in the description or the respective figure:

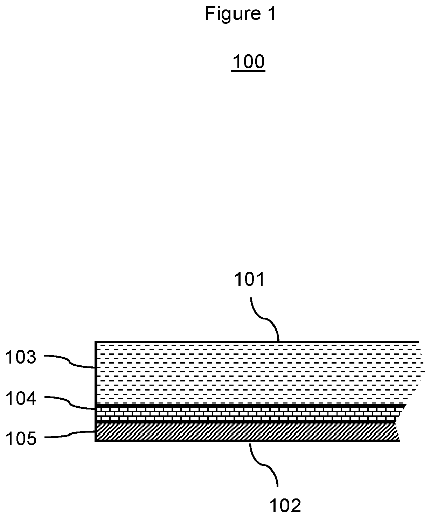

- Figure 1: schematic partial cross-sectional view of a sheet-like composite of the invention;

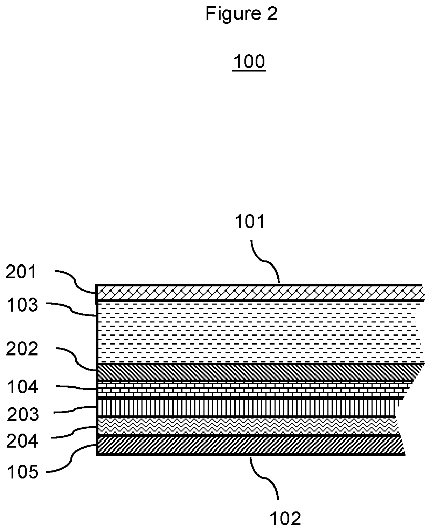

- Figure 2: schematic partial cross-sectional view of a further sheet-like composite of the invention;

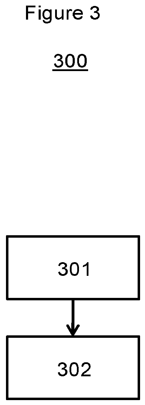

- Figure 3: a flow chart of a method according to the invention for producing a sheet-like composite;

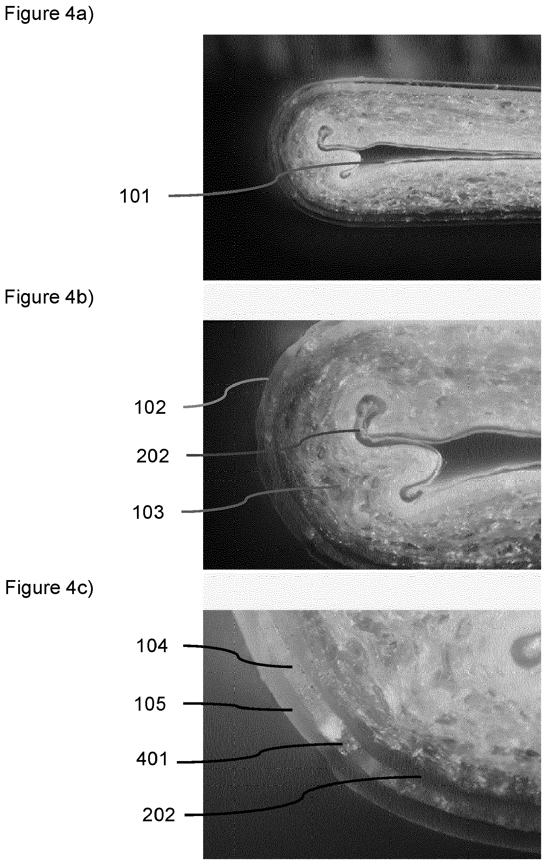

- Figure 4a): a microscope image of a 180°-fold in a sheet-like composite not according to the invention;
- Figure 4b): a detail of the microscope image in Figure 4a);
- Figure 4c): a detail of the microscope image in Figure 4b);
- Figure 5: a schematic diagram of an arrangement of groove lines for producing a closed container;
- Figure 6: a schematic partial top view of a web of sheet-like composite;
- Figure 7: a schematic partial top view of a sheet-like composite for use in the tube method of producing closed containers;
- Figure 8: a schematic diagram of a roll according to the invention;

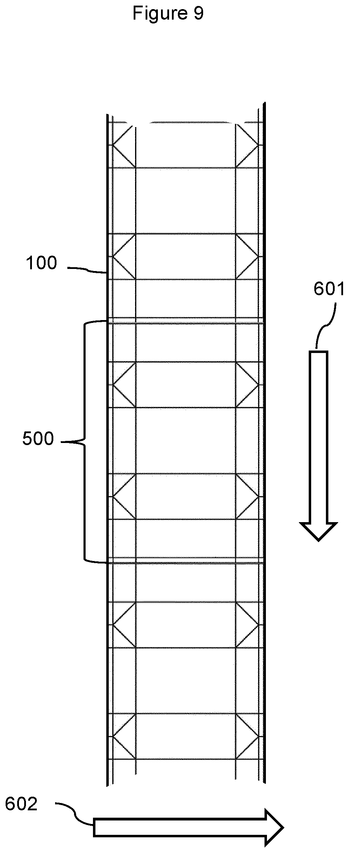

- Figure 9: a schematic partial top view of a sheet-like composite for use in the sleeve method of producing closed containers;

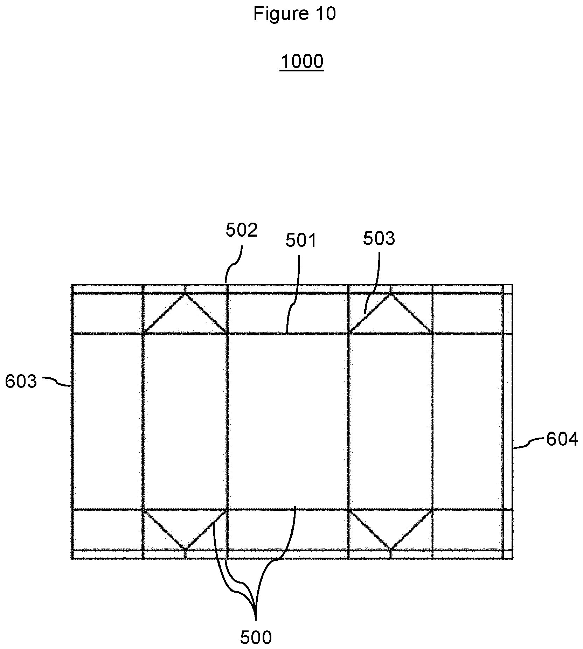

- Figure 10: a schematic diagram of a blank according to the invention;

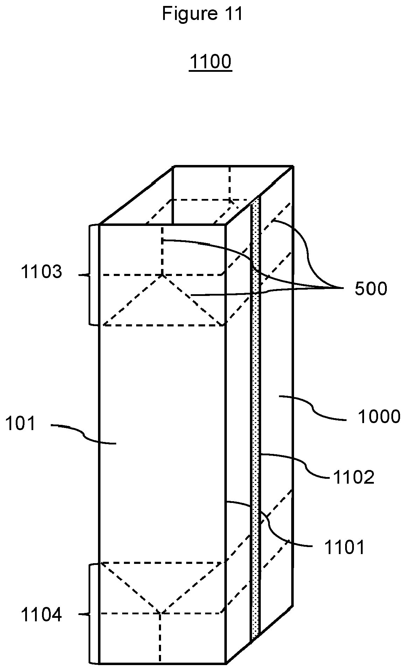

- Figure 11: a schematic diagram of a container precursor of the invention;
- Figure 12: a schematic diagram of a closed container of the invention;

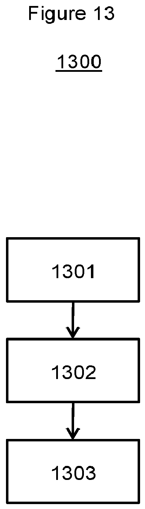

- Figure 13: a flow chart of a method according to the invention of producing a container precursor;

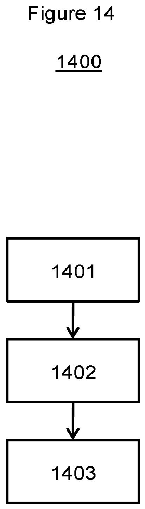

- Figure 14: a flow chart of a method according to the invention of producing a closed container;
- Figure 15: a flow chart of a further method according to the invention of producing a closed container; and
- Figure 16: a schematic partial view of a closed container prepared for the above described test method *"Oxygen transmission rate (OTR) of containers"* or *"Water vapour transmission rate (WVTR) of containers".*

Figure 1 shows a cross-sectional view of a sheet-like composite 100 of the invention. The Figure provides a cutaway view. The sheet-like composite 100 comprises a layer sequence which comprises of a carrier layer 103, a barrier layer 104 and a first inner polymer layer 105 superimposed to one another, in the preceding order from an outer surface 101 of the sheet-like composite 100 to an inner surface 102 of the sheet-like composite 100. The barrier layer 104 comprises a plurality of fibres.

A partial sheet-like composite is obtainable from the sheet-like composite 100 as described above in the test methods section. The partial sheet-like composite consists of only the layers of the sheet-like composite 100, which are arranged on a side of the carrier layer 103 facing the inner surface 102. The partial sheet-like composite has a first composite direction in a composite plane of the partial sheet-like composite, and a further composite direction, which is also in the composite plane of the partial sheet-like composite, but perpendicular to the first composite direction. A first composite tensile strength of the partial sheet-like composite refers to a tensile test in the first composite direction, whereas a further composite tensile strength of the partial sheet-like composite refers to a tensile test in the further composite direction. A ratio of the first composite tensile strength to the further composite tensile strength is about 1.1. Further, the barrier layer 104 has a first tensile strength in a first barrier layer direction and a further tensile strength in a further barrier layer direction, which is perpendicular to the first barrier layer direction. A ratio of the first tensile strength to the further tensile strength is also about 1.1.

Figure 2 shows a cross-sectional view of a further sheet-like composite 100 of the invention. The Figure provides a cutaway view. The sheet-like composite 100 comprises a layer sequence which consists of an outer polymer layer 201 of LDPE, a carrier layer 103 of cardboard, a first adhesion promoter layer 202, a barrier layer 104, a further adhesion promoter layer 203, a further inner polymer layer 204 of LDPE and a first inner polymer layer 105 superimposed to one another, in the preceding order from an outer surface 101 of the sheet-like composite 100 to an inner surface 102 of the sheet-like composite 100. The first inner polymer layer 105 consists of a blend of 30 wt.-% mLLDPE and 70 wt.-% LDPE, based on the weight of the first inner polymer layer 105. The barrier layer 104 is an MFC-film.

A partial sheet-like composite is obtainable from the sheet-like composite 100 as described above in the test methods section. The partial sheet-like composite consists of the first adhesion promoter layer 202, the barrier layer 104, the further adhesion promoter layer 203, the further inner polymer layer 204 and the first inner polymer layer 105. The partial sheet-like composite has a first composite direction in a composite plane of the partial sheet-like composite, and a further composite direction, which is also in the composite plane of the partial sheet-like composite, but perpendicular to the first composite direction. A first composite tensile strength of the partial sheet-like composite refers to a tensile test in the first composite direction, whereas a further composite tensile strength of the partial sheet-like composite refers to a tensile test in the further composite direction. A ratio of the first composite tensile strength to the further composite tensile strength is 1.3. Further, the barrier layer 104 has a first tensile strength in a first barrier layer direction and a further tensile strength in a further barrier layer direction, which is perpendicular to the first barrier layer direction. A ratio of the first tensile strength to the further tensile strength is 1.2.

Figure 3 shows a flow chart of a method 300 according to the invention for producing the sheet-like composite 100 of Figure 2. The method 300 comprises a method step A. 301 of providing a sheet-like composite precursor, the MFC-film, a first adhesion promoter composition, a further adhesion promoter composition, a first inner polymer layer composition and a further inner polymer layer composition. The sheet-like composite precursor consists of the outer polymer layer 201 and the carrier layer 103. The first adhesion promoter composition and the further adhesion promoter composition are granulates of a respective adhesion promoter polymer. The first inner polymer layer composition is a mixture of 30 wt.-% of a granulate of the mPE of the first inner polymer layer and 70 wt.-% of a granulate of the LDPE of the first inner polymer layer. The further inner polymer layer composition is an LDPE granulate. In a method step B. 302 the barrier layer 104 is laminated to the carrier layer 103 with the first adhesion promoter composition as laminating agent, thereby obtaining the first adhesion promoter layer 202 from the first adhesion promoter composition. Here, the first adhesion promoter composition is melted in an extruder and the first adhesion promoter layer is introduced between the carrier layer 103 and the barrier layer 104 by melt extrusion coating. Further in step B. 302, but after the laminating operation, the further adhesion promoter composition, the further inner polymer layer composition and the first inner polymer layer composition are melt extrusion coated to the barrier layer 104 by coextrusion, thereby obtaining the further adhesion promoter layer 203, the further inner polymer layer 204 and the first inner polymer layer 105.

Figure 4a) shows a microscope image of a 180°-fold in a sheet-like composite not according to the invention. Figures 4b) and 4c) show details of the microscope image in Figure 4a), whereby a higher magnification is used in figure 4c) than in figure 4b). The sheet-like composite comprises a layer sequence which consists of an outer polymer layer 201 of LDPE, a carrier layer 103 of cardboard, a first adhesion promoter layer 202, a barrier layer 104 and a first inner polymer layer 105 of an mLLDPE/LDPE-blend superimposed to one another in the preceding order from an outer surface 101 of the sheet-like composite to an inner surface 102 of the sheet-like composite. At the 180°-fold the inner surface 102 is stretched and the outer surface 101 is compressed and thus forms a bulge as seen in Figures 4a) and 4b). As a result, layers of the sheet-like composite, which are rather close to the inner surface 102, are significantly stretched at the 180°-fold. As the carrier layer 103 is to impart dimensional stability to containers made from the sheet-like composite, this layer is relatively thick as can easily be seen from the Figure 4a). In consequence, the layers, which are significantly stretched at the 180°-fold, are all the layers on the side of the carrier layer 103, which faces the inner surface 102. These are the layers of the partial sheet-like composite, i.e. here: the first adhesion promoter layer 202, the barrier layer 104 and the first inner polymer layer 105. Thus, if the tensile strength of these layers in the direction of stretching at the 180°-fold is not high enough, one or more of the layers will break in folding the sheet-like composite. Here, the barrier layer 104 is an MFC-film. The tensile strength of the MFC-film in the direction of stretching at the 180°-fold is not sufficient. When the sheet-like composite was folded, a tear 401 occurred in the MFC-film. Such tears impair the tightness of a container made from the sheet-like composite and thus the shelf-life of the container.

Figure 5 shows a schematic diagram of an arrangement of groove lines 500 for producing a closed container 1200. The closed container 12000 is obtainable from a blank 1000 of a sheet-like composite 100 or from an area of a sheet-like composite 100 in the form of a web, where the area includes the arrangement of groove lines 500. Preparing the close container 1200 includes folding along the groove lines and joining surface areas of the blank 1000 or area to one another. The arrangement of groove lines 500 consists of longitudinal groove lines 502, i.e. groove lines which, prior to folding, in the blank 1000 or area are in the direction of a height of the closed container 1200, transversal groove lines 501, i.e. groove lines which are perpendicular to the longitudinal groove lines 502, and diagonal groove lines 503. In producing the closed container 1200, the blank 1000 or area of the sheet-like composite 100 is folded 180° along some of the groove lines. In the Figure, these groove lines are depicted by broken lines. It can be seen that the length of all the transversal groove lines for 180°-folds 504 in sum is significantly greater than the length of all the longitudinal groove lines for 180°-folds 505 in sum. Along each of the transversal groove lines for 180°-folds 504 and longitudinal groove lines for 180°-folds 505 the blank 1000 or area of the sheet-like composite 100 is folded with the inner surface 102 of the sheet-like composite 100 on the outer side of the fold. This means that the inner surface 102 of the sheet-like composite 100 is stretched at each of the transversal groove lines for 180°-folds 504 and longitudinal groove lines for 180°-folds 505. As shown in Figures 4a) to 4c), 180°-folds bear a risk of the layers on the inner side of the carrier layer 103, in particular the barrier layer 104, tearing if the tensile strength of the respective layer is not high enough in the direction of stretching. As the transversal groove lines for 180°-folds 504 of the arrangement of groove lines 500 are in sum much longer than the longitudinal groove lines for 180°-folds 505, resistance of the layers on the inner side of the carrier layer 103, in particular of the barrier layer 104, to tearing due to folding along the transversal groove lines for 180°-folds 504 will be crucial for the tightness and thus the shelf-life of the closed container 1200.

Figure 6 shows a schematic partial top view of a web of sheet-like composite 100. The sheet-like composite 100 has a first longitudinal rim 603 and a further longitudinal rim 604 which is opposite the first longitudinal rim 603 in a transversal direction of sheet-like composite 100. If the sheet-like composite 100 is the sheet-like composite 100 of Figure 1 or Figure 2, it comprises a barrier layer 104, which comprises a plurality of fibres. A machine direction (MD) 601 of producing the barrier layer 104 is a direction of predominant orientation of the fibres of the plurality of fibres in the barrier layer 104. Due to practical reasons of production, the MD 601 of the barrier layer 104 will always be in the direction of the length of a web of the barrier layer 104 and the cross direction (CD) 602 of producing the barrier layer 104 will be in the direction of the width of the web. It follows that the MD 601 of the barrier layer 104 will also be in the direction of the length of a web of the sheet-like composite 100 and the CD 602 will be in the direction of the width of the web of the sheet-like composite 100 as shown in Figure 6.

Figure 7 shows a schematic partial top view of a sheet-like composite for use in the tube method of producing closed containers 1200. The sheet-like composite 100 comprises the layer structure shown in Figure 2 and is in the form of a web. The MD 601 of the barrier layer 104 is in the direction of the length of the web, whereas the CD 602 of the barrier layer 104 is in the direction of the width of the web. Further, the sheet-like composite 100 comprises a plurality of the arrangements of groove lines 500 in Figure 5. In the tube method, the transversal groove lines 501 are often oriented along the width of the web, i.e. perpendicular to the length of the web. This is what is shown in Figure 7.

Figure 8 shows a schematic diagram of a roll 800 according to the invention. The roll 800 comprises the sheet-like composite 100 of Figure 2 in a rolled-up state.

Figure 9 shows a schematic partial top view of a sheet-like composite 100 according to Figure 2 for use in the sleeve method of producing closed containers 1200. The sheet-like composite 100 is in the form of a web and comprises a plurality of the arrangements of groove lines 500 in Figure 5. In the sleeve method, the transversal groove lines 501 are often oriented along the length of the web, i.e. perpendicular to the width of the web. This is what is shown in Figure 9. The MD 601 of the barrier layer 104 is in the direction of the length of the web, whereas the CD 602 of the barrier layer 104 is in the direction of the width of the web.

Figure 10 shows a schematic diagram of a blank 1000 according to the invention. The blank 1000 has been obtained by cutting the sheet-like composite 100 in Figure 9 to size for production of a single closed container 1200. Accordingly, the blank 1000 includes exactly one of the arrangements of groove lines 500. Further, the blank 1000 has a first longitudinal rim 603 and a further longitudinal rim 604 which is opposite the first longitudinal rim 603 in a transversal direction of sheet-like composite 100.

Figure 11 shows a schematic diagram of a container precursor 1100 of the invention. The container precursor 1100 has been obtained from the blank 1000 in Figure 10 by folding along longitudinal groove lines 502, thereby creating longitudinal folds 1101, and contacting and sealing the first longitudinal rim 603 to the further longitudinal rim 604 to obtain a longitudinal seam 1102. The container precursor 1100 is in the form of a sleeve, hence the name *"sleeve method".* The sleeve is open in a top region 1103 and a base region 1104.

Figure 12 shows a schematic diagram of a closed container 1200 of the invention. The closed container 1200 contains a food or drink product 1201. The closed container 1200 is obtainable by the tube method from the roll 800 in Figure 8 and by the sleeve method from the container precursor 1100 in Figure 11. The closed container 1200 comprises exactly 4 longitudinal edges 1202, obtained by folding along longitudinal groove lines 502. A base region 1204 and a top region 1203 of the closed container 1200 have been obtained by further folding along groove lines and sealing surface areas to one another.

Figure 13 shows a flow chart of a method 1300 according to the invention of producing the container precursor 1100 in Figure 11. The method 1300 comprises a method step A) 1301 of providing the blank 1000 of Figure 10. In a method step B) 1302 the blank 1000 is folded along the longitudinal folds 502. In a method step C) 1303 the first longitudinal rim 603 is pressed and sealed to the further longitudinal rim 604, thereby obtaining a longitudinal seam 1102.

Figure 14 shows a flow chart of a sleeve method 1400 according to the invention of producing the closed container 1200 in Figure 12. The method 1400 comprises a method step A] i] 1401 of providing the container precursor 1100 in Figure 11. The container precursor 1100 is loaded into a filling machine, where a base region 1204 of the closed container 1200 is formed from the base region 1104 of the container precursor 1100 and the base region 1204 is closed by folding the blank 1000 and joining surface areas of the blank 1000 to one another by hot air sealing. This gives rise to a beaker that is open in the top region 1103. The beaker is sterilised with hydrogen peroxide. In a method step B] 1402 the beaker is filled with the food or drink product 1201 via the open top region 1103. In a method step C] i] 1403 a top region 1203 of the closed container 1200 is formed from the top region 1102 of the container precursor 1100 and closed by folding the blank 1000 and joining surface areas of the blank 1000 to one another by ultrasound sealing.

Figure 15 shows a flow chart of a tube method 1400 according to the invention of producing the closed container 1200 in Figure 12. The method 1400 comprises a method step A] ii] 1501 of providing the roll 800 in Figure 8. The roll 800 is loaded into a filling machine, where the sheet-like composite 100 is continuously unwound from the roll 800. In an unwound section of the sheet-like composite 100 the first longitudinal rim 603 of the sheet-like composite 100 is contacted and sealed to the further longitudinal rim 604 of the sheet-like composite 100, thereby obtaining a longitudinal seam 1102. In this course, the section of the sheet-like composite 100 is formed into a tubular shape, hence the name tube method. In a method step B] 1402 the tubular shape is filled with the food or drink product 1201. In a method step C] ii] 1502 a section of the tubular shape is closed at a first end and a further end, which is opposite the first end, by ultrasound sealing, thereby obtaining a closed section. The closed section is separated off by cutting and formed into the closed container 1200 by shaping the base region 1204 and the top region 1203 of the closed container 1200. This involves folding the sheet-like composite 100 of the closed section and joining surface areas of the closed section to one another.

Figure 16 shows a schematic partial view of a closed container prepared for the above described test method *"Oxygen transmission rate (OTR) of containers"* or *"Water vapour transmission rate (WVTR) of containers".* The metal plate 1601 having the gas inlet 1603 and the gas outlet 1604 can be seen. The metal plate 1601 is glued to the container in a gas tight manner via the sealing compound 1602. For measuring the OTR or WVTR of the container, the respective measurement device is to be connected to the gas inlet 1603 and the gas outlet 1604.

### LIST OF REFERENCE SIGNS

- **100**: sheet-like composite according to the invention
- **101**: outer surface
- **102**: inner surface
- **103**: carrier layer
- **104**: barrier layer
- **105**: first inner polymer layer
- **201**: outer polymer layer
- **202**: first adhesion promoter layer
- **203**: further adhesion promoter layer
- **204**: further inner polymer layer
- **300**: method according to the invention for producing a sheet-like composite
- **301**: method step A.
- **302**: method step B.
- **401**: tear
- **500**: arrangement of groove lines
- **501**: transversal groove line
- **502**: longitudinal groove line
- **503**: diagonal groove line
- **504**: transversal groove line for 180°-fold
- **505**: longitudinal groove line for 180°-fold
- **601**: machine direction (MD) of producing the barrier layer
- **602**: cross direction (CD) of producing the barrier layer
- **603**: first longitudinal rim
- **604**: further longitudinal rim
- **800**: roll
- **1000**: blank
- **1100**: container precursor according to the invention
- **1101**: longitudinal fold
- **1102**: longitudinal seam
- **1103**: top region of the container precursor
- **1104**: base region of the container precursor
- **1200**: closed container according to the invention
- **1201**: food or drink product
- **1202**: longitudinal edge
- **1203**: top region of the closed container
- **1204**: base region of the closed container
- **1300**: method according to the invention for producing a container precursor
- **1301**: method step A)
- **1302**: method step B)
- **1303**: method step C)
- **1400**: method according to the invention for producing a closed container
- **1401**: method step A] i]
- **1402**: method step B]
- **1403**: method step C] i]
- **1501**: method step A] ii]
- **1502**: method step C] ii]
- **1601**: metal plate
- **1602**: sealing compound
- **1603**: gas inlet
- **1604**: gas outlet

## Claims

1. A sheet-like composite (100), comprising a layer sequence which comprises the following layers, superimposed to one another, in the following order from an outer surface (101) of the sheet-like composite (100) to an inner surface (102) of the sheet-like composite (100):
a. a carrier layer (103),
b. a barrier layer (104) which comprises a plurality of fibres, and
c. a first inner polymer layer (105);
wherein a partial sheet-like composite consists of only the layers of the sheet-like composite (100), which are arranged on a side of the carrier layer (103) facing the inner surface (102);
wherein the partial sheet-like composite
- has a first composite direction in a composite plane of the partial sheet-like composite,
- a further composite direction, which is also in the composite plane of the partial sheet-like composite, but perpendicular to the first composite direction,
- a first composite tensile strength in the first composite direction, and
- a further composite tensile strength in the further composite direction;
**characterised in that** a ratio of the first composite tensile strength to the further composite tensile strength is in a range from more than 0.5 to 1.9.

2. A sheet-like composite (100), comprising a layer sequence which comprises the following layers, superimposed to one another, in the following order from an outer surface (101) of the sheet-like composite (100) to an inner surface (102) of the sheet-like composite (100):
a. a carrier layer (103),
b. a barrier layer (104), and
c. a first inner polymer layer (105);
wherein the barrier layer (104)
- comprises a plurality of fibres,
- has a first tensile strength in a first barrier layer direction, and
- a further tensile strength in a further barrier layer direction, which is perpendicular to the first barrier layer direction;
**characterised in that** a ratio of the first tensile strength to the further tensile strength is in a range from more than 0.5 to less than 1.7.

3. The sheet-like composite (100) according to any of the preceding claims, wherein the barrier layer (104) has a moisture content in a range from 3.0 to 10.0 wt.-%, based on the total weight of the barrier layer (104).

4. The sheet-like composite (100) according to any of the preceding claims, wherein the fibres of the plurality of fibres are one selected from the group, consisting of cellulose fibres, lignocellulose fibres, and hemicellulose fibres, or a combination of at least two thereof both.

5. The sheet-like composite (100) according to any of the preceding claims, wherein the plurality of fibres constitutes a three-dimensional network or a two-dimensional network.

6. The sheet-like composite (100) according to any of the preceding claims, wherein the sheet-like composite (100) includes a plurality of arrangements of groove lines (500) in the carrier layer (103),
wherein for each of the arrangements of groove lines (500) a container is obtainable from an area of the sheet-like composite (100) by folding along the groove lines of the arrangement of groove lines (500) and joining surface areas of the area to one another, wherein at least one of the arrangements (500) of the plurality of arrangements of groove lines (500) comprises at least one transversal groove line (501), which runs perpendicular to a direction of a height of the container, which is obtainable from an area of the sheet-like composite (100) by folding along the groove lines of the respective arrangement of groove lines (500) and joining surface areas of the area to one another;
wherein the at least one transversal groove line (501) runs at an angle
- in a range from 80 to 100°, preferably from 85 to 95°, more preferably from 87 to 93°, or
- in a range from -10 to +10°, preferably from -5 to +5°, more preferably from -3 to +3°
to a length of the sheet-like composite (100).

7. A method (300) for producing a sheet-like composite (100), the method (300) comprising as method steps:
A. providing
- a sheet-like composite precursor comprising a carrier layer (103), and
- a barrier layer (104) which comprises a plurality of fibres;
B. laminating the barrier layer (104) to the carrier layer (103) on a side of the carrier layer (103), which in the sheet-like composite (100) faces an inner surface (102) of the sheet-like composite (100), and superimposing a first inner polymer layer (105) to the barrier layer (104) on a side of the barrier layer (104), which in the sheet-like composite (100) faces the inner surface (102);
wherein a partial sheet-like composite consists of only the layers of the sheet-like composite (100), which are arranged on a side of the carrier layer (103) facing the inner surface (101);
wherein the partial sheet-like composite
- has a first composite direction in a composite plane of the partial sheet-like composite,
- a further composite direction, which is also in the composite plane of the partial sheet-like composite, but perpendicular to the first composite direction,
- a first composite tensile strength in the first composite direction, and
- a further composite tensile strength in the further composite direction;
wherein a ratio of the first composite tensile strength to the further composite tensile strength is in a range from more than 0.5 to 1.9.

8. A method (300) for producing a sheet-like composite (100), the method (300) comprising as method steps:
A. providing
- a sheet-like composite precursor comprising a carrier layer (103), and
- a barrier layer (104);
B. laminating the barrier layer (104) to the carrier layer (103) on a side of the carrier layer (103), which in the sheet-like composite (100) faces an inner surface (102) of the sheet-like composite (100), and superimposing a first inner polymer layer (105) to the barrier layer (104) on a side of the barrier layer (104), which in the sheet-like composite (100) faces the inner surface (102);
wherein in the method step A. (301) the barrier layer (104)
- comprises a plurality of fibres,
- has a first tensile strength in a first barrier layer direction, and
- a further tensile strength in a further barrier layer direction, which is perpendicular to the first barrier layer direction;
wherein a ratio of the first tensile strength to the further tensile strength is in a range from more than 0.5 to less than 1.7.

9. The method (300) according to claim 7 or 8, wherein the method (300) comprises a further method step C. (303) of either
i. rolling-up the sheet-like composite (100) to a roll (800), or
ii. separating at least part of the sheet-like composite (100) into a multitude of blanks (1000), wherein each of the blanks (1000) is for production of a single container.

10. A roll (800) or a blank (1000), which in each case is obtainable by the method (300) according to claim 9.

11. A roll (800) which comprises the sheet-like composite (100) according to any of the claims 1 to 6, or a sheet-like composite (100), which is obtainable by the method (300) according to claim 7 or 8, in each case in a rolled-up state.

12. A blank (1000) of the sheet-like composite (100) according to any of the claims 1 to 6, or of a sheet-like composite (100), which is obtainable by the method (300) according to claim 7 or 8, wherein the blank (1000) includes exactly one arrangement of groove lines (500) in the carrier layer (103),
wherein a single container is obtainable from the blank (1000) by folding the blank (1000) along the groove lines of the arrangement of groove lines (500) and joining surface areas of the blank (1000) to one another.

13. A container precursor (1100) comprising the blank (1000) according to claim 10 or 12, wherein the blank (1000) comprises a first longitudinal rim (603) and a further longitudinal rim (604),
wherein the first longitudinal rim (603) is joined to the further longitudinal rim (604), thereby forming a longitudinal seam (1102) of the container precursor (1100).

14. A closed container (1200) comprising a sheet-like region of the sheet-like composite (100) according to any of the claims 1 to 6, or of a sheet-like composite (100), which is obtainable by the method (300) according to claim 7 or 8, or the blank (1000) according to claim 10 or 12.

15. A method (1300) comprising, as method steps:
A) providing the blank (1000) according to claim 10 or 12,
wherein the blank (1000) comprises a first longitudinal rim (603) and a further longitudinal rim (604);
B) folding the blank (1000); and
C) contacting and joining the first longitudinal rim (603) to the further longitudinal rim (604), thereby obtaining a longitudinal seam (1102).

16. A method (1400) for producing a closed container (1200), the method (1400) comprising as method steps:
A] providing
i] the container precursor (1100) according to claim 13 or a container precursor (1100), which is obtainable by the method (1300) according to claim 15, or
ii] the roll (800) according to claim 10 or 11;
B] contacting the inner surface (102) with a food or drink product (1201);
C] forming a closed container (1200)
i] from the container precursor (1100) by folding the blank (1000) and joining surface areas of the blank (1000) to one another, or
ii] from an area of the sheet-like composite (100) by folding the area and joining surface areas of the area to one another.

17. A use of the sheet-like composite (100) according to any of the claims 1 to 6, or of a sheet-like composite (100), which is obtainable by the method (300) according to claim 7 or 8, in each case for production of a food or drink product container.

18. A use of the container precursor (1100) according to claim 13 or of a container precursor (1100), which is obtainable by the method (1300) according to claim 15, in each case for production of a food or drink product container.

19. A use of the roll (800) according to claim 10 or 11 for production of a food or drink product container.

20. A use of a barrier film for production of a packaging laminate, wherein the barrier film
- comprises a plurality of fibres,
- has a first tensile strength in a first barrier layer direction, and
- a further tensile strength in a further barrier layer direction, which is perpendicular to the first barrier layer direction;
wherein a ratio of the first tensile strength to the further tensile strength is in a range from more than 0.5 to less than 1.7.
